(19) **Europäisches Patentamt / European Patent Office / Office européen des brevets**

(11) **EP 1 634 435 B1**

(12) **FASCICULE DE BREVET EUROPEEN**

(45) Date de publication et mention de la délivrance du brevet:
**23.03.2011   Bulletin 2011/12**

(21) Numéro de dépôt: **04739745.0**

(22) Date de dépôt: **08.06.2004**

(51) Int Cl.:
*H04M 9/08* *(2006.01)*     *H04M 3/56* *(2006.01)*

(86) Numéro de dépôt international:
**PCT/EP2004/006239**

(87) Numéro de publication internationale:
**WO 2004/112370 (23.12.2004 Gazette 2004/52)**

(54) **PROCEDE ET DISPOSITIF DE TRAITEMENT D'ECHO**

VERFAHREN UND VORRICHTUNG ZUR ECHOUNTERDRÜCKUNG

ECHO PROCESSING METHOD AND DEVICE

(84) Etats contractants désignés:
**AT BE BG CH CY CZ DE DK EE ES FI FR GB GR HU IE IT LI LU MC NL PL PT RO SE SI SK TR**

(30) Priorité: **13.06.2003   FR 0307167**

(43) Date de publication de la demande:
**15.03.2006   Bulletin 2006/11**

(73) Titulaire: **FRANCE TELECOM**
**75015 Paris (FR)**

(72) Inventeurs:
• **THOMAS, Jean-Philippe**
  **F-22660 Trevou Treguignec (FR)**

• **DURAND, Olivier**
  **F-86550 Mignaloux-Beauvoir (FR)**

(74) Mandataire: **Guéné, Patrick**
**Cabinet Vidon**
**Technopole Atalante**
**16B, rue de Jouanet**
**BP 90333**
**35703 Rennes Cedex 7 (FR)**

(56) Documents cités:
**EP-A- 0 903 726     DE-A- 10 153 188**

**Description**

La présente invention concerne un dispositif et un procédé de traitement d'écho acoustique destinés à atténuer, dans un signal capté, des composantes d'écho d'un signal diffusé.

Plus particulièrement, l'invention se situe dans le domaine des systèmes de communication de type multivoie.

L'écho acoustique existe principalement dans certains types de communication où le terminal d'un utilisateur distant comporte un ou plusieurs haut-parleurs se substituant à l'écouteur, et d'un ou de plusieurs microphones. Il s'agit par exemple d'équipements d'audioconférences ou de postes fonctionnant en "mains libres" tels que des téléphones mobiles. Sans précautions particulières, le son émis par le haut-parleur subit des réflexions multiples (contre les murs, le plafond, etc.) constituant autant d'échos différents qui sont captés par le microphone au même titre que la parole utile. L'ensemble constitué du haut-parleur, du microphone et de leur environnement physique constitue ainsi un système générateur d'écho.

Dans le cas d'un dispositif multivoie, un système d'annulation d'écho comprend N voies de réception de signal comprenant, un haut-parleur Hpi (i=1, 2,..., N) et M canaux de prise de son, chaque canal de son comprenant un ensemble de microphones MCj (j=1, 2, ...,M). Ce système comprend ainsi N*M chemins acoustiques et, N*M dispositifs d'annulation d'écho H(i,j).

Dans le cadre d'une utilisation d'une pluralité d'équipements d'audioconférences ou de postes fonctionnant en "mains libres" dans une même pièce, apparaissent des phénomènes d'écho croisé.

Aussi, si plusieurs personnes dans une même pièce, à proximité les unes des autres, sont en communication téléphonique "mains libres" avec des interlocuteurs distants, les signaux reproduits par le haut-parleur de chaque équipement téléphonique sont captés par le microphone de chaque équipement téléphonique présent dans la pièce et ainsi retransmis à chaque interlocuteur distant. Au niveau d'un équipement téléphonique "mains libres", aucune annulation d'écho n'est effectuée sur les signaux reproduits par les haut-parleurs des autres combinés téléphoniques à proximité d'un équipement téléphonique. Ceci perturbe notablement la communication et rend l'utilisation de plusieurs équipements téléphoniques "mains libres" impossible dans une même pièce. Des techniques, décrites notamment dans le document EP-A- 0 903 726, sont connues pour prendre en compte des échos, dans le cadre d'une communication entre deux terminaux distants. Mais elles n'apportent pas de solution à ce problème particulier.

Ainsi, les mécanismes de correction d'écho de l'état de la technique ne corrigent pas correctement les échos lorsque de multiples dispositifs de communication proches les uns des autres fonctionnent simultanément.

L'invention a pour but de résoudre le problème précité en proposant un dispositif de traitement d'écho selon la revendication 1.

Corrélativement, l'invention propose un procédé de traitement d'écho selon la revendication 12.

Ainsi, de multiples dispositifs de communication, situés à proximité les uns des autres, peuvent fonctionner de manière simultanée sans être perturbés par les signaux sonores générés par les autres dispositifs de communication.

De plus, grâce aux informations représentatives du couplage séparant un haut-parleur du microphone, la correction prend en compte l'atténuation, fonction du couplage, des signaux sonores émis par les autres dispositifs de communication.

Ainsi, le signal capté est modifié de façon précise, la qualité de la communication est ainsi grandement améliorée.

Plus précisément, le dispositif de traitement d'écho est inclus dans le dispositif de communication.

Ainsi, le coût du dispositif de traitement d'écho est réduit. Le dispositif de communication comprenant déjà certains composants, certains peuvent être aussi utilisés par le dispositif de traitement d'écho.

Plus particulièrement, un contrôle d'écho est effectué entre au moins un des haut-parleurs et au moins un microphone du dispositif de communication.

Ainsi, les atténuations d'échos sont réalisées distinctement et d'une façon simple. Les signaux sonores issus des autres dispositifs de communication sont traités par une modification simple et efficace du signal capté du dispositif de communication. Les signaux sonores issus des haut-parleurs du dispositif de communication, d'énergie supérieure aux signaux sonores des autres dispositifs sont traités par un moyen de contrôle d'écho plus précis mais plus complexe.

En effectuant ainsi plusieurs types de correction en fonction de l'origine du signal sonore du haut-parleur du dispositif de communication ou des haut-parleurs des autres dispositifs de communication dans le même local 100, l'annulation d'écho est optimale tout en restant simple à implémenter.

Plus précisément, les informations reçues et représentatives d'au moins un signal diffusé d'au moins un autre dispositif de communication ont préalablement été pondérées par un coefficient représentatif du couplage séparant un haut-parleur dudit au moins un autre dispositif de communication du microphone du dispositif de communication.

En outre, on modifie le signal capté est modifié en fonction du signal diffusé pondéré d'au moins un autre dispositif de communication dans le signal de référence de contrôle d'écho du dispositif de communication.

Ainsi, le signal reçu ne nécessite aucun traitement particulier, les tâches de traitement d'écho sont ainsi réduites. Le traitement d'écho traite alors un signal diffusé déjà pondéré par un coefficient représentatif du couplage, il n'a pas à considérer cette distance dans la modification du signal capté.

L'invention concerne aussi un dispositif de traitement écho selon la revendication 6.

Corrélativement, l'invention propose un procédé de traitement d'écho selon la revendication 15.

Ainsi, l'autre dispositif de communication reçoit des informations représentatives du signal diffusé du dispositif de communication, il peut alors corriger les nuisances sonores générées par le signal diffusé du dispositif de communication.

La qualité du signal capté est alors améliorée, il est alors possible d'utiliser de multiples dispositifs de communication "mains libres" dans un même local 100.

Préférentiellement, on obtient des informations représentatives du couplage séparant au moins un haut-parleur dudit au moins un dispositif de communication du microphone de l'autre dispositif de communication.

De plus, on pondère les informations représentatives du signal diffusé du dispositif de communication par des coefficients associés aux informations représentatives du couplage séparant au moins un haut-parleur dudit au moins un dispositif de communication du microphone de l'autre dispositif de communication.

Ainsi, le signal capté est corrigé de façon précise en tenant compte du couplage des sources sonores.

Plus précisément, on détermine le nombre d'autres dispositifs de communication et le nombre de haut-parleurs des autres dispositifs de communication.

Ainsi, l'environnement dans lequel le dispositif de traitement d'écho est situé, est connu, il est alors possible de connaître toutes les sources sonores générant des perturbations sur les communications.

Plus précisément, on génère au moins un signal audible prédéterminé, on reçoit, par l'intermédiaire d'une liaison avec au moins un autre dispositif, des informations représentatives de la réception par au moins l'autre dispositif du signal audible, on détermine la distance séparant un haut-parleur dudit dispositif de communication du microphone d'au moins un autre dispositif de communication.

Ainsi, la tâche de l'utilisateur est simplifiée, il n'a plus à se préoccuper de mesurer la distance le séparant de chaque autre dispositif.

De plus, cette détermination étant automatique, des mesures de distance peuvent être effectuées périodiquement et elle peut ainsi prendre en compte la mobilité de certains dispositifs de communication.

L'invention concerne aussi le programme d'ordinateur stocké sur un support d'informations, ledit programme comportant des instructions permettant de mettre en oeuvre les procédés succinctement décrits, lorsqu'ils sont chargés et exécuté par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

- la Fig. 1 représente une première variante d'un système de communication conforme à l'invention ;
- la Fig. 2 représente un dispositif de communication mettant en oeuvre l'invention ;
- la Fig. 3 représente la interface audio du dispositif de communication mettant en oeuvre l'invention ;
- la Fig. 4 représente un module de contrôle d'écho multivoie pour les haut-parleurs 40a et 40b et le microphone 50a ;
- la Fig. 5 représente l'algorithme de détermination automatique du couplage mis en oeuvre selon une variante de l'invention dans un dispositif de communication ;
- la Fig. 6 représente une table de correspondance permettant de déterminer les coefficients de pondération en fonction du couplage déterminée ;
- la Fig. 7 représente l'algorithme de transfert des signaux pondérés des haut-parleurs des dispositifs de communication ;
- La Fig. 8 représente l'algorithme de traitement des signaux fournis par le microphone du dispositif de communication selon une variante ;
- la Fig. 9 représente une seconde variante d'un système de communication conforme à l' invention ;
- la Fig. 10 représente l'algorithme de détermination automatique des couplage et de transfert des signaux pondérés des haut-parleurs des dispositifs de communication mis en oeuvre dans la seconde variante de système de communication.

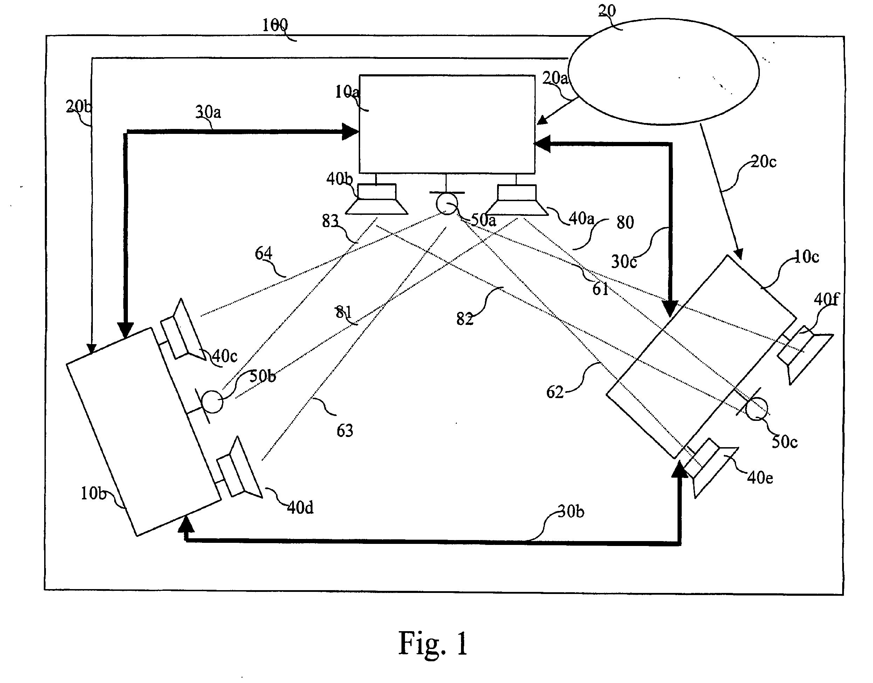

La Fig. 1 représente une première variante d'un système de communication conforme à l'invention.

Le système de communication selon la variante comprend par exemple trois dispositifs de communication 10a, 10b et 10c dans un local ou une pièce 100. Ce sont par exemple des équipements d'audioconférence ou des équipements téléphoniques fonctionnant en "mains libres" tels que des téléphones mobiles.

L'idée de base de l'invention consiste pour chaque dispositif de communication à obtenir le signal reproduit par le haut-parleur de chacun des autres dispositifs de communication, ce signal étant pondéré par un coefficient représentatif du couplage entre le microphone du dispositif obtenant le signal et le haut-parleur de chacun des autres dispositifs et de modifier le signal délivré par le microphone de ce dispositif en fonction de ce coefficient et du signal reproduit par le haut-parleur de chacun des autres dispositifs de communication.

Nous entendons par couplage, entre un microphone d'un dispositif de communication obtenant un signal et le haut-parleur d'un autre dispositif de communication, la distance séparant le microphone du dispositif de communication obtenant un signal et le haut-parleur d'un autre dispositif de communication. La distance selon l'invention est à la fois la distance directe et/ou indirecte entre le microphone du dispositif de communication et le haut-parleur de l'autre dispositif de communication. La distance indirecte est la distance parcourue par l'onde sonore prenant en compte les différents trajets multiples et réflexions de celle-ci avant d'arriver au microphone du dispositif de communication.

Les dispositifs de communication 10a, 10b et 10c sont reliés à un réseau 20 par des liaisons respectives 20a, 20b et 20c.

Le réseau 20 est par exemple un réseau de télécommunication d'un opérateur de télécommunication tel qu'un réseau téléphonique commuté, un réseau de type RNIS (Réseau Numérique à Intégration de Service) ou un réseau de communication téléphonique cellulaire tel qu'un réseau de type GSM (Global System for Mobile communications), UMTS (Universal Mobile Telecommunications System), GPRS (General Packet Radio Services), etc.

Le réseau 20 peut être aussi par exemple un réseau local de type Ethernet d'une entreprise, connecté à un réseau externe de type Internet.

Le réseau 20 peut être aussi un réseau téléphonique sans fil ou un réseau téléphonique filaire relié à un réseau externe de type réseau téléphonique commuté (RTC).

Les dispositifs de communication 10 peuvent communiquer entre eux ou avec d'autres correspondants distants par l'intermédiaire du réseau 20.

Le dispositif de communication 10a comporte deux haut-parleurs notés 40a et 40b. Il est à remarquer que l'invention est aussi réalisable avec un seul haut-parleur ou plus de deux haut-parleurs.

Les haut-parleurs 40a et 40b restituent par exemple le signal sonore stéréo diffusé d'un correspondant de l'utilisateur du dispositif de communication 10a.

Le dispositif de communication 10a comporte aussi un microphone 50a qui reçoit le signal sonore capté pour le restituer au correspondant.

Il est à remarquer ici, que le microphone 50a est, dans un exemple particulier, une antenne acoustique constituée d'une pluralité de microphones.

Tous les dispositifs de communication 10 dans le local 100 sont reliés entre eux par l'intermédiaire de liaisons 30. Ainsi, selon l'exemple de la Fig. 1, le dispositif de communication 10a est relié aux autres dispositifs de communication 10b et 10c respectivement par l'intermédiaire de liaisons 30a et 30c. La liaison 30a permet le transfert du dispositif de communication 10b au dispositif de communication 10a des signaux diffusés reproduits par les haut-parleurs 40c, 40d, préalablement pondérés par un coefficient représentatif de leur couplage respectif avec le microphone 50a. Elle permet aussi le transfert du dispositif de communication 10a au dispositif de communication 10b des signaux diffusés reproduits par les haut-parleurs 40a, 40b, préalablement pondérés par un coefficient représentatif de leur couplage respectif avec le microphone 50b.

La liaison 30c permet le transfert du dispositif de communication 30c au dispositif de communication 10a des signaux diffusés reproduits par les haut-parleurs 40e, 40f, préalablement pondérés par un coefficient représentatif de leur couplage respectif avec le microphone 50a. Elle permet aussi le transfert du dispositif de communication 10a au dispositif de communication 10c des signaux diffusés reproduits par les haut-parleurs 40a, 40b, préalablement pondérés par un coefficient représentatif de leur couplage respectif avec le microphone 50c.

Le dispositif de communication 10b est relié au dispositif de communication 10c par l'intermédiaire d'une liaison 30b. Cette liaison permet le transfert du dispositif de communication 10b au dispositif de communication 10c des signaux diffusés reproduits par les haut-parleurs 40c, 40d préalablement pondérés par un coefficient représentatif de leur couplage respectif avec le microphone 50c. Cette liaison permet aussi le transfert du dispositif de communication 10c au dispositif de communication 10b des signaux diffusés reproduits par les haut-parleurs 40e, 40f préalablement pondérés par un coefficient représentatif de leur couplage respectif avec le microphone 50b.

Les liaisons 30 sont par exemple des liaisons permettant de véhiculer des données sous forme numérique telles que des liaisons de type Ethernet. Ces liaisons 30 peuvent aussi être des liaisons de type RS232. Bien entendu, tout autre type de liaison peut être envisagé.

Le dispositif de communication 10b comporte deux haut-parleurs 40c et 40d ainsi qu'un microphone 50b.

Il est à remarquer ici, que le microphone 50b est dans un exemple particulier une antenne acoustique constituée d'une pluralité de microphones.

Le dispositif de communication 10c comporte deux haut-parleurs 40e et 40f ainsi qu'un microphone 50c.

Il est à remarquer ici, que le microphone 50b est dans un exemple particulier une antenne acoustique constituée d'une pluralité de microphones.

Les segments en pointillés 61, 62, 63 et 64 représentent le trajet des ondes directes acoustiques émises respectivement par les haut-parleurs 40f, 40e du dispositif de communication 10c et par les haut-parleurs 40d et 40c du dispositif de communication 10b vers le microphone 50a du dispositif de communication 10a.

Les segments en pointillés 80 et 81 représentent le trajet des ondes directes acoustiques émises par le haut-parleur 40a du dispositif de communication 10a respectivement vers les microphones 50c et 50b des dispositifs de communication 10c et 10b.

Les segments en pointillés 82 et 83 représentent le trajet des ondes directes acoustiques émises par le haut-parleur 40b du dispositif de communication 10a respectivement vers les microphones 50c et 50d des dispositifs de communication 10c et 10b.

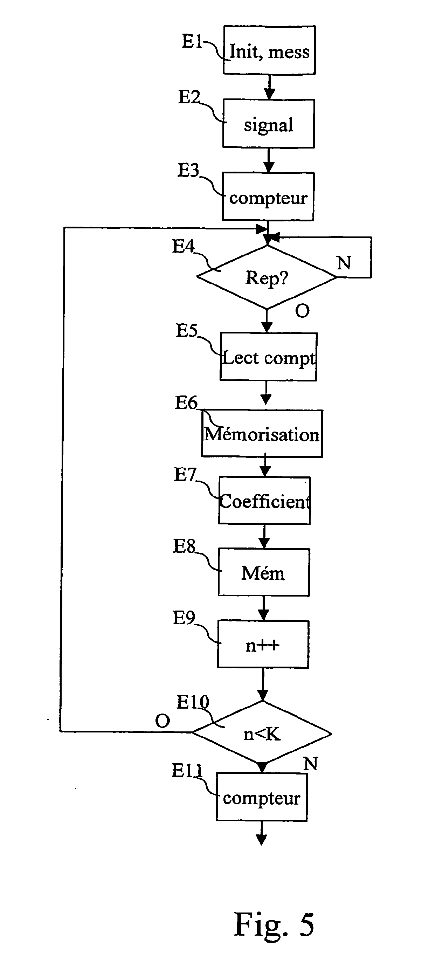

Il est à remarquer que les segments 61, 62, 63, 64, 80, 81, 82 et 83 représentent les trajets directs des ondes acoustiques émises par les haut-parleurs 40. Les différentes réflexions de ces signaux acoustiques ne sont pas représentées sur la Fig. 1 par souci de clarté. Il est néanmoins bien entendu que ces signaux réfléchis sont aussi traités par le dispositif de communication 10 selon l'invention et plus particulièrement lorsque l'algorithme de détermination automatique des couplages décrit ultérieurement en référence à la Fig. 5 est mis en oeuvre dans l'invention.

Il est à remarquer que les trajets des ondes acoustiques émises par les haut-parleurs 40c et 40d du dispositif de communication 10b vers le microphone 50c du dispositif de communication 10c ne sont pas reproduits dans la Fig. 1 par souci de clarté. Il en est de même pour les trajets des ondes acoustiques émises par les haut-parleurs 40e et 40f du dispositif de communication 10c vers le microphone 50b du dispositif de communication 10b.

Toutes ces ondes acoustiques génèrent un écho croisé et créent des perturbations sur les communications des dispositifs de communication 10 avec leurs correspondants respectifs.

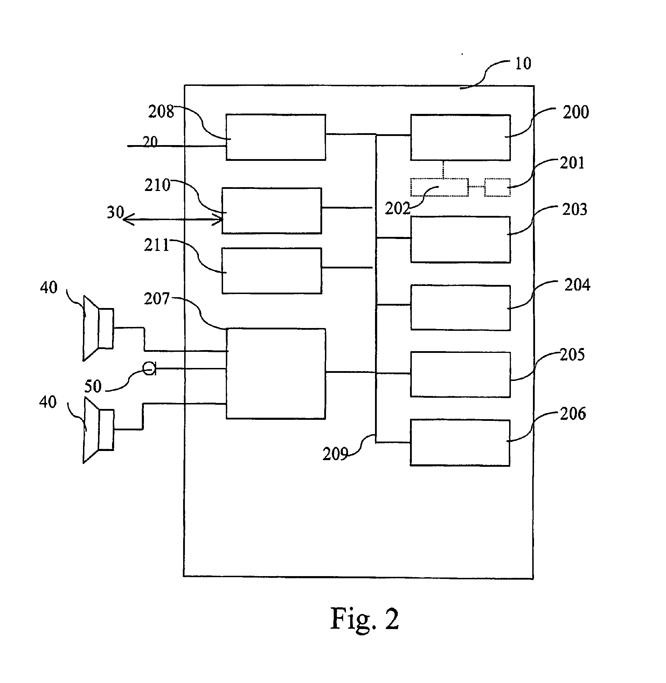

La Fig. 2 représente un exemple de dispositif de communication 10 mettant en oeuvre l'invention. Ce dispositif est adapté à déterminer des coefficients de pondération pour chacun des signaux diffusés reproduits par chacun de ses haut-parleurs 40 en fonction du couplage séparant ceux-ci d'un microphone 50 d'un dispositif de communication 10 placé dans le même local 100, soit à pondérer le signal diffusé reproduit par chacun de ses haut-parleurs 40 et à transmettre le signal pondéré reproduit par chacun de ses haut-parleurs 40 à au moins un dispositif de communication 10 placé dans le même local 100, soit à transmettre au moins les coefficients de pondération, voire le signal diffusé reproduit par chacun de ses haut-parleurs 40 à au moins un autre dispositif de communication 10 placé dans le même local 100.

Ce dispositif de communication 10 est aussi adapté soit à recevoir le signal diffusé reproduit par chacun des haut-parleurs 40 des autres dispositifs de communication 10 placés dans le même local 100 et leurs coefficients de pondération associés, soit à recevoir le signal pondéré reproduit par chacun des haut-parleurs 40 des autres dispositifs de communication 10 placés dans le même local 100 et à modifier le signal sonore capté issu de son microphone 50 à partir des coefficients de pondération et d'un signal reçu ou d'un signal pondéré reçu comme cela va être expliqué ci-dessous.

Le dispositif de communication 10 est par exemple un micro-ordinateur comportant un bus de communication 209 auquel sont reliés un processeur 200, une mémoire morte 204, une mémoire vive 203, un écran 206, un clavier 205, un disque dur 211, au moins une carte réseau 208 permettant de communiquer avec le réseau 20 et une interface audio 207 à laquelle sont reliés des haut-parleurs 40 et un microphone 50.

Le disque dur 211 mémorise le programme mettant en oeuvre le procédé selon l'invention et qui sera décrit par la suite. Le disque dur 211 comporte aussi, selon une variante de l'invention, des données représentatives d'au moins un signal électrique servant à déterminer le couplage séparant un des haut-parleurs 40 du dispositif de communication considéré d'un microphone 50 d'un autre dispositif de communication 10 placé dans le même local 100.

Le disque dur comporte aussi au moins une table de correspondance permettant de déterminer les coefficients de pondération en fonction du couplage déterminée.

Ces programmes, ainsi que la ou chaque table de correspondance et les données peuvent aussi être soit reçus via le réseau de communication 20 et la carte réseau 208, soit mémorisés dans la mémoire morte 204.

Lors de l'activation du dispositif de communication 10, les programmes selon la présente invention, la table de correspondance ainsi que les données sont transférés dans la mémoire vive 203 qui contient alors le code exécutable de l'invention ainsi que les registres contenant les variables nécessaires à la mise en oeuvre de l'invention.

Le dispositif de communication 10 comporte aussi selon une variante de l'invention un compteur 202 apte à compter les impulsions d'une horloge 201.

Le clavier 205 et l'écran 206 assurent l'interface homme machine avec l'utilisateur. Par l'intermédiaire de l'écran 206, le processeur 200 invite l'utilisateur du dispositif de communication 10 à saisir le nombre d'autres dispositifs de communication 10 présents dans le local 100 ainsi qu'un identifiant associé à chacun des autres dispositifs de communication 10. Cet identifiant est par exemple le numéro de port auquel est relié chaque dispositif de communication 10. L'utilisateur fournit ces informations au processeur 200 par l'intermédiaire du clavier 205.

Par l'intermédiaire de l'écran 206, le processeur 200 invite l'utilisateur du dispositif de communication 10 à saisir le nombre de microphones 50 de chaque autre dispositif de communication 10 présent dans le local 100 ainsi qu'un identifiant associé à chacun des microphones 50. L'utilisateur fournit ces informations au processeur 200 par l'intermédiaire du clavier 205.

Enfin, selon le mode préféré de l'invention, le processeur 200 invite l'utilisateur du dispositif de communication 10, par l'intermédiaire de l'écran 206, pour chaque haut-parleur 40 du dispositif de communication 10, à saisir le couplage existant entre chaque haut-parleur du dispositif de communication 10 de chaque microphone 50 de chaque autre dispositif de communication 10 présent dans le local. Par souci de simplicité de mise en oeuvre et de compréhension par l'utilisateur, le processeur 200 invite l'utilisateur du dispositif de communication 10 à saisir la distance séparant chaque haut-parleur 40 du dispositif de communication 10 de chaque microphone 50 de chaque autre dispositif de communication 10 présent dans le local 100.

L'utilisateur fournit ces informations au processeur 200 par l'intermédiaire du clavier 205.

Bien entendu, selon la configuration du local 100 et l'emplacement des différents dispositifs de communication 10 les uns par rapport aux autres, l'utilisateur, s'il le juge nécessaire peut aussi fournir des informations représentatives des trajets multiples qu'il considère opportuns.

Il est à remarquer que cette distance peut être approximative. Elle n'a pas besoin d'être très précise pour que l'invention obtienne des résultats satisfaisants.

Aussi, selon une variante, le processeur 200 invite l'utilisateur du dispositif de communication 10, par l'intermédiaire de l'écran 206, à saisir seulement les coordonnées des microphones situés à proximité, par exemple d'un mètre, des haut-parleurs 40 du dispositif de communication 10.

Prenons à titre d'exemple le cas correspondant à la Fig. 1. Deux autres dispositifs de communication 10b et 10c disposant chacun de deux haut-parleurs 40c, 40d, 40e, 40f et d'un microphone 50b et 50c ont été indiqués par l'utilisateur du dispositif de communication 10a.

L'utilisateur du dispositif de communication 10a a saisi une distance de deux mètres entre le haut-parleur 40a et le microphone 50c, une distance de un mètre et demi entre le haut-parleur 40a et le microphone 50b, une distance de deux mètres entre le haut-parleur 40b et le microphone 50c et une distance de un mètre entre le haut-parleur 40b et le microphone 50b.

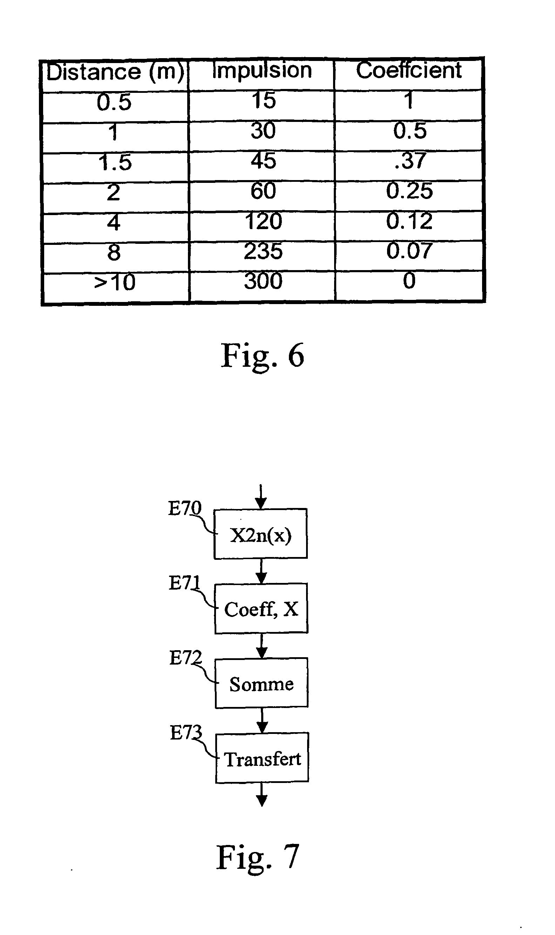

Le processeur 200, à partir des distances saisies, détermine avec la table de correspondance représentée à la Fig. 6, pour chacune des distances séparant chacun de ses haut-parleurs 40a, 40b de chacun des microphones 50b, 50c des autres dispositifs de communication 10b et 10c, le coefficient à appliquer aux signaux délivrés à chaque autre dispositif de communication 10b, 10c.

En variante, plusieurs tables de correspondance sont mémorisées dans la mémoire morte 204. Ces différentes tables correspondent à différents environnements de locaux. En effet, certains locaux comportent des parois fortement réfléchissantes, une table de correspondance prenant en compte les réflexions des ondes sonores peut ainsi être mémorisée de la même façon qu'une table ne prenant pas en compte ces réflexions est aussi mémorisée.

D'autres tables peuvent correspondre à différents placements de dispositifs de communication 10 les uns par rapport aux autres dans le local 100. En effet, le positionnement des dispositifs de communication est susceptible d'influencer les ondes réfléchies par rapport aux ondes directes, des tables de correspondance prenant en compte les différents positionnements peuvent aussi être mémorisées. Enfin, d'autres tables de correspondance peuvent être mémorisées, chacune de ces tables étant adaptée à une surface et/ou un volume du local 100.

L'utilisateur par l'intermédiaire du clavier 205 sélectionne alors la table de correspondance appropriée à l'environnement dans lequel il se trouve ou le dispositif de communication 10 détermine de façon automatique la table de correspondante optimale en fonction de réponses de l'utilisateur à des questions prédéterminées.

Dans notre exemple, le processeur 200 mémorise les valeurs des coefficients $\alpha xy$ suivants : $\alpha ac$ ayant pour valeur 0,25, $\alpha ab$ ayant pour valeur 0,37, $\alpha bc$ ayant pour valeur 0,25 et $\alpha bb$ ayant pour valeur 0,25 où x représente l'indice du haut-parleur 40 considéré et y représente l'indice du microphone 50 considéré.

Le dispositif de communication 10 comporte aussi une interface 210 permettant la réception, par les liaisons 30, des signaux pondérés des haut-parleurs 40 des autres dispositifs de communication 10.

L'interface 210 permet aussi le transfert des signaux pondérés des haut-parleurs 40 du dispositif de communication 10 sur les liaisons 30 à destination des autres dispositifs de communication 10.

Il est à remarquer que les signaux reçus et transférés sont des signaux numériques.

Cette interface 210 est par exemple une carte réseau de type Ethernet ou une liaison de type RS232.

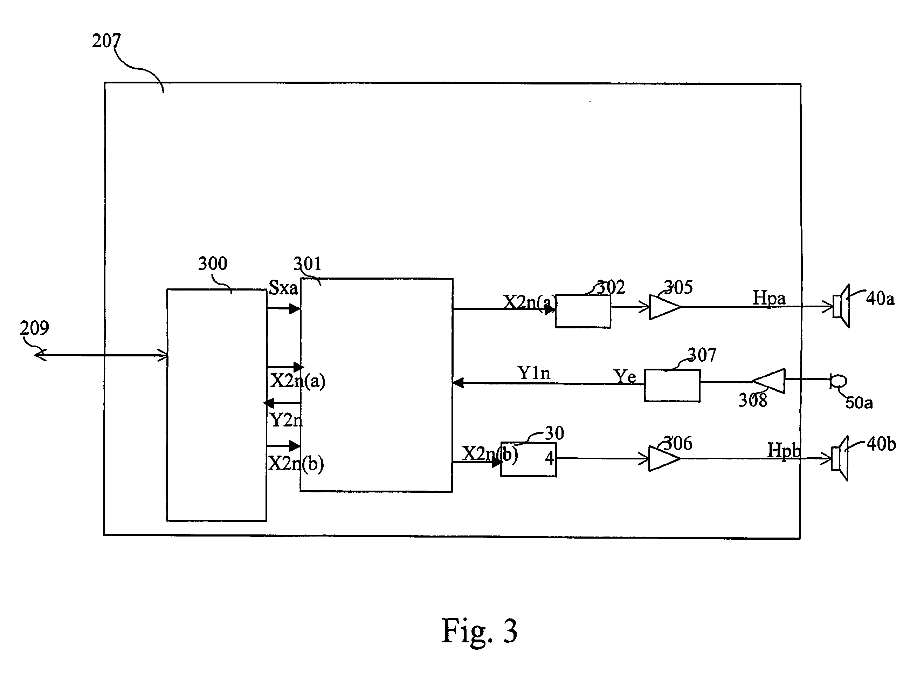

La Fig. 3 représente l'interface audio d'un dispositif de communication 10 mettant en oeuvre l'invention.

A titre d'exemple, nous allons décrire le sous-ensemble de l'interface audio 207 du dispositif de communication 10a. Les autres dispositifs de communication 10b et 10c comportent aussi un sous-ensemble de l'interface audio 207 similaire, ils ne seront pas décrits.

L'interface audio 207 est reliée au bus de communication 209 par l'intermédiaire d'une interface 300. L'interface 300 assure, en sus des opérations classiques d'une interfaces de interface audio classique, la séparation, pour chaque haut-parleur 40a et 40b, des signaux X2n(a) et X2n(b) reçus du réseau 20a et par l'intermédiaire de la carte réseau 208.

Il est à remarquer ici, que la séparation des signaux reçus respectivement pour les haut-parleurs 40a et 40b peut aussi être assurée par le processeur 200 du dispositif de communication 10a.

L'interface audio 300 assure aussi la sommation des signaux diffusés par les autres dispositifs de communications 10 présents dans le local 100 et le transfert du signal Sxa ainsi formé au module de contrôle d'écho multivoie 301.

Ainsi, l'interface audio forme le signal Sxa tel que :

$$Sxa = (\alpha caX2n(c) + \alpha daX2n(d)) + (\alpha eaX2n(e) + \alpha faX2n(f)).$$

où :

$\alpha ca$ est le coefficient de pondération représentatif du couplage entre le haut-parleur 40c et le microphone 50a, X2n (c) le signal diffusé reproduit par le haut-parleur 40c ;
$\alpha da$ est le coefficient de pondération représentatif du couplage entre le haut-parleur 40d et le microphone 50a, X2n (d) le signal diffusé reproduit par le haut-parleur 40d ;
$\alpha ea$ est le coefficient de pondération représentatif du couplage entre le haut-parleur 40e et le microphone 50a, X2n (e) le signal diffusé reproduit par le haut-parleur 40e;
$\alpha fa$ est le coefficient de pondération représentatif du couplage entre le haut-parleur 40f et le microphone 50a, X2n (f) le signal diffusé reproduit par le haut-parleur 40f.

Il est à remarquer ici, que la sommation des signaux diffusés par les haut-parleurs des autres dispositifs de communication peut aussi être effectuée par le processeur 200.

L'interface 300 assure aussi le transfert du signal Y2n modifié traité par le module 301 vers le processeur 200 en vue d'une transmission de celui-ci sur le réseau 20.

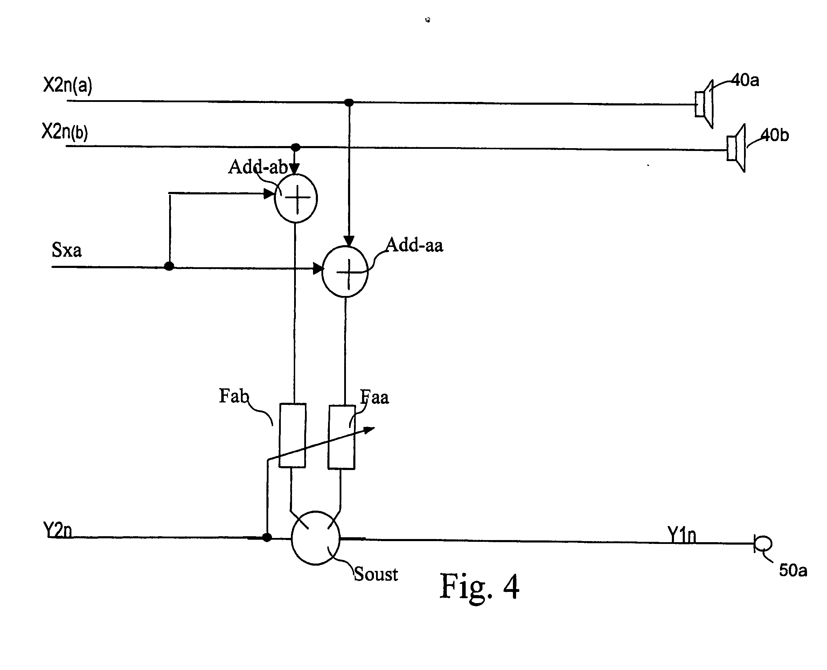

Le module 301 est un module de contrôle d'écho multivoie pour les haut-parleurs 40a et 40b et le microphone 50a. Il sera décrit plus en détail en référence à la Fig. 4.

Le module de contrôle d'écho 301 effectue un traitement sur le signal Y1n de manière à supprimer l'écho dû au couplage entre les haut-parleurs 40a et 40b avec le microphone 50a. Le module de contrôle d'écho 301 effectue aussi un traitement sur le signal Y1n de manière à supprimer l'écho dû au couplage entre les haut-parleurs des autres dispositifs de communication présents dans le local 100 avec le microphone 50a et forme ainsi un signal Y2n.

Le module de contrôle d'écho 301 fournit deux signaux X2n(x), ou x représente l'indice du haut-parleur considéré, notés X2n(a) et X2n(b). Ces signaux sont appelés signaux diffusés et sont convertis sous forme de signaux analogiques respectivement par des convertisseurs analogiques numériques 302 et 304. Les signaux convertis sont ensuite amplifiés par des amplificateurs respectifs 305 et 306 pour être finalement délivrés aux haut-parleurs 40a et 40b. Les signaux amplifiés sont notés Hpa pour le signal délivré au haut-parleur 40a et Hpb pour le signal délivré au haut-parleur 40b.

L'interface audio 207 comporte aussi un amplificateur 308 qui amplifie le signal électrique généré par le microphone 50a. Le signal amplifié est ensuite converti sous forme d'un signal numérique, dit signal capté, par un convertisseur analogique numérique 307. Le signal converti est traité ensuite par le module de contrôle d'écho 301.

Ainsi, l'invention supprime de façon simple tous les effets négatifs liés à l'écho croisé entre plusieurs dispositifs de communication 10 placés dans le même local 100.

La Fig. 4 représente le module de contrôle adaptatif 301. C'est un dispositif de contrôle d'écho multivoie 301 utilisé par l'invention.

Le dispositif de contrôle d'écho 301 du dispositif de communication 10a va, à titre d'exemple, être décrit. Les autres dispositifs de communication 10b et 10c comportent un même dispositif de contrôle d'écho 301. Ils ne seront donc pas décrits.

Le dispositif de contrôle d'écho multivoie 301 comprend une pluralité N de voies de réception, N étant un entier supérieur ou égal à 1, et une pluralité M de voies d'émission, M étant un entier supérieur ou égal à 1.

Dans notre exemple de réalisation, N est égal à deux et M est égal à un. Bien entendu, un nombre supérieur de haut-parleurs 40 et de microphones peuvent être utilisés dans le cadre de la présente invention.

Chacune des deux voies de réception comprend un transducteur de sortie haut-parleur 40 qui produit une onde de pression sonore en réponse à un signal d'entrée X2n(x).

En outre, la voie d'émission délivre le signal Y1n précédemment décrit.

Le dispositif de contrôle d'écho 301 comporte deux additionneurs notés Add-aa et Add-ab.

L'additionneur Add-aa effectue la sommation du signal d'entrée X2n(a) et du signal Sxa qui est la sommation des signaux diffusés par les autres dispositifs de communications 10 présents dans le local 100. Le signal ainsi formé est le signal de référence du haut-parleur 40a utilisé par le filtre d'identification Faa pour modifier le signal capté Y1n.

L'additionneur Add-ab effectue la sommation du signal d'entrée X2n(b) et du signal Sxa qui est la sommation des signaux diffusés par les autres dispositifs de communications 10 présents dans le local 100. Le signal ainsi formé est le signal de référence du haut-parleur 40b utilisé par le filtre d'identification Fab pour modifier le signal capté Y1n.

Les deux filtres d'identification Faa et Fab à coefficients variables estiment la réponse impulsionnelle de la salle dans laquelle est placé le dispositif de communication. Cette réponse impulsionnelle est entre autres représentative du couplage acoustique entre les différents dispositifs de communication 10.

Il comprend d'autre part, pour chaque filtre Faa et Fab, des moyens d'adaptation (non représentés) des coefficients du filtre en fonction d'un pas d'adaptation $\mu_x$, (x égal à a ou b), et des moyens de calcul (non représentés) du pas d'adaptation $\mu_x$.

Chaque filtre Faa et Fab génère un signal de filtrage qui est soustrait au signal de sortie Y1n par un soustracteur noté Soust en Fig. 4 pour fournir un signal filtré Y2n.

Conformément à l'invention, le dispositif comprend en outre des moyens (non représentés) d'estimation de la puissance instantanée $P1n_{a,b}$ de chaque signal d'entrée X2n(x), et de la puissance instantanée $P2$ du signal de sortie Y1n.

En variante, le dispositif de contrôle d'écho multivoie 301 est un dispositif tel que décrit dans la demande de brevet française publiée sous la référence FR2824982.

La Fig. 5 représente l'algorithme de détermination automatique de couplage mis en oeuvre dans un dispositif de communication 10 selon une variante de l'invention.

Selon cette variante, l'utilisateur n'a pas à saisir les distances séparant les haut-parleurs 40 du dispositif de communication 10 des microphones 50 des autres dispositifs de communication 10. La détermination est effectuée de façon automatique par le dispositif de communication 10 de l'utilisateur.

Selon cette variante, toutes les perturbations liées aux couplages existant entre les différents haut-parleurs des microphones sont déterminées.

Au lancement de l'application, le processeur 200 lit à partir de la mémoire morte 204 ou du disque dur 211, les instructions du programme correspondant aux étapes E1 à E11 de la Fig. 5 et les charge en mémoire vive RAM 203 pour les exécuter.

A titre d'exemple, nous décrirons le processus de l'algorithme lorsqu'il est effectué au niveau du dispositif de communication 10a. L'algorithme s'effectue de la même façon au niveau des autres dispositifs de communication 10b et 10c. Ils ne seront donc pas décrits.

A l'étape E1, le processeur 200 lit dans la mémoire vive 203 des données préalablement saisies par l'utilisateur du dispositif de communication 10a, ces données étant le nombre K d'autres dispositifs de communication 10b, 10c présents dans la pièce 100 et éventuellement le nombre de microphones 50 dont ils disposent chacun. Par souci de simplification, chaque dispositif de communication 10b, 10c ne dispose que d'un seul microphone 50b, 50c. A la même étape, le processeur 200 initialise le compteur 202 à la valeur zéro, et initialise une variable n à zéro. Le processeur 200 génère aussi un message sur le réseau 20 ou par l'intermédiaire des liaisons 30a, 30c à destination des autres dispositifs de communication 10b et 10c les informant qu'il va exécuter une procédure d'évaluation de distance.

Ces opérations effectuées, le processeur 200 passe à l'étape E2 et lit à partir de la mémoire morte 204 ou du disque dur 211 les données représentatives d'un signal électrique prédéterminé. Ce signal est par exemple un signal audible mono fréquence. A la même étape, le processeur 200 transfère les données représentatives du signal prédéterminé à la carte son 207 qui transfère par exemple ce signal au haut-parleur 40a.

Ces opérations réalisées, le processeur 200 déclenche à l'étape E3 le compteur 202 représenté en pointillés à la Fig. 2 qui compte le nombre d'impulsions de l'horloge 201 représentée en pointillés à la Fig. 2. L'horloge 201 est par exemple une horloge fonctionnant à une fréquence de 10KHz.

L'étape suivante E4 est une boucle d'attente d'une réponse d'un des autres dispositifs de communication 10b, 10c au signal sonore généré par le haut-parleur 40a à l'étape E2.

Les autres dispositifs de communication 10b, 10c étant préalablement informés de la procédure d'évaluation de distance génèrent, à la réception du signal généré par le haut-parleur 40a, un message de réponse comprenant entre autres leur identifiant ou l'identifiant de leur microphone 50, sur le réseau 20 ou en variante sur les liaisons 30 les reliant au dispositif de communication 10a.

Tant qu'une réponse n'est pas reçue, le processeur 200 reste dans la boucle d'attente E4.

A la réception de la première réponse (par exemple du dispositif de communication 10b), le processeur 200 passe à l'étape E5, qui consiste à lire la valeur courante du compteur 202.

La lecture effectuée, le processeur 200 à l'étape E6 mémorise, dans la mémoire vive 203, l'identifiant du dispositif de communication 10b ayant répondu, ainsi que la valeur courante du compteur précédemment lue à l'étape E4.

Cette opération réalisée, le processeur 200 à l'étape E7 détermine le coefficient de pondération à appliquer sur le signal du haut-parleur 40a ayant généré le signal sonore et le microphone 50b du dispositif de communication 10b ayant répondu. Le processeur 200 consulte alors la table de correspondance représentée à la Fig. 6 permettant de déterminer les coefficients de pondération en fonction du nombre d'impulsions mémorisé à l'étape E6.

La détermination du coefficient $\alpha xy$ est basée sur un calcul effectué à partir de la vitesse de propagation du son dans l'air.

Cette opération effectuée, le processeur 200 passe à l'étape E8 et mémorise le coefficient $\alpha xy$ déterminé et sa valeur.

A titre d'exemple, le dispositif de communication 10b a généré un message de réponse reçu par le dispositif de communication 10a à l'étape E4, le compteur 202 est à la valeur 45, le coefficient αab est alors égal à 0, 37.

Le processeur 200, à l'étape suivante E9 incrémente la variable n d'une unité et compare celle-ci au nombre K.

Le processeur 200 compare à l'étape E10, la variable n à K. Si n est inférieure à K, tous les autres dispositifs de communication n'ont pas répondu au signal sonore généré à l'étape E2, le processeur 200 retourne alors à l'étape E4 et attend un nouveau message de réponse d'un autre dispositif de communication 10, en l'occurrence le dispositif de communication 10c.

Les étapes E4 à E9 sont réitérées autant de fois qu'il existe d'autres dispositifs de communication 10.

Si n est égale à K, tous les autres dispositifs de communication 10 ont répondu au message, en l'occurrence, le dispositif de communication 10c. Le processeur 200 passe alors à l'étape E11 et désactive alors le compteur 202.

Les étapes E1 à E11 sont réitérées autant de fois que le dispositif de communication 10a possède de haut-parleurs 40 et bien sûr pour chaque haut-parleur 40.

Ainsi, les étapes E1 à E11 sont réitérées une nouvelle fois pour le haut-parleur 40b du dispositif de communication 10a.

Les étapes E1 à E11 sont aussi réitérées autant de fois qu'il y a de microphones présents dans le local 100. Ces étapes sont réitérées bien sûr pour chacun des microphones 50.

En variante, le dispositif de communication 10 génère une pluralité de signaux audibles à des fréquences différentes et détermine un coefficient de pondération pour chacune des fréquences. Les étapes E1 à E11 sont alors réitérées autant de fois que de signaux de fréquences différentes sont générés.

Ainsi, la pondération est adaptée au spectre en fréquence. Des coefficients de pondération sont alors différents si ceux-ci sont appliqués aux fréquences hautes ou aux fréquences basses des signaux reproduits par les haut-parleurs 40.

Il est aussi à remarquer que cette procédure peut être effectuée périodiquement ou à la demande d'un utilisateur d'un dispositif de communication 10.

Il est à remarquer que l'invention telle que décrite est implémentée pour chacun des dispositifs de communication 10 placé dans le même local 100.

En variante, préalablement au transfert des données représentatives du signal prédéterminé à la carte son 207 à l'étape E2, le processeur 200 détermine le délai de réponse par les liaisons respectives 30a et 30c des dispositifs de communication 10b et 10c. En effet si les liaisons 30 sont des liaisons lentes où la vitesse de transmission fluctue dans le temps comme une liaison par l'intermédiaire d'un réseau de type Internet, la détermination automatique du couplage risque d'être perturbée. Le processeur 200 génère sur les liaisons 30a et 30b par exemple des signaux classiquement connus sous la dénomination de PING à destination des autres dispositifs de communication, attend une réponse des dispositifs de communication 10a et 10b et détermine ainsi le délai de transfert sur le réseau en activant par exemple l'horloge 201 et le compteur 202.

Pour chacun des dispositifs de communication, le délai mesuré sera retranché de la valeur du compteur lue à l'étape E5.

Selon une autre variante, l'algorithme est réitéré de manière à déterminer les échos du signal sonore.

Les autres dispositifs de communication 10b, 10c génèrent, à la réception d'un autre signal qui est une réflexion par un des éléments du local 100 du signal généré par le haut-parleur 40a, un message de réponse comprenant entre autres leur identifiant ou l'identifiant de leur microphone 50, sur le réseau 20 ou en variante sur les liaisons 30 les reliant au dispositif de communication 10a. Le processeur 200 du dispositif de communication 10a reçoit alors à l'étape E4 ce message de réponse d'un des autres dispositifs de communication 10b, 10c au signal sonore généré par le haut-parleur 40a à l'étape E2.

Le processeur 200 mémorise les différentes réponses, détermine lequel parmi le signal direct et les signaux réfléchis est le plus significatif pour chaque autre dispositif de communication et applique le coefficient correspondant au plus significatif en tant que coefficient représentatif du couplage.

Bien entendu, les variantes précédemment mentionnées peuvent aussi être combinées entre elles.

La Fig. 6 représente une table de correspondance permettant de déterminer les coefficients de pondération en fonction du couplage déterminée.

Cette table est une table de correspondance qui permet la détermination des coefficients de pondération αxy en fonction des couplages mesurés par l'utilisateur.

Cette table est aussi une table de correspondance qui permet la détermination des coefficients de pondération αxy en fonction du nombre d'impulsions comptées par le compteur 202 lorsque l'invention comporte un mode de mesure automatique des couplages.

Il est à remarquer que cette table peut comporter un nombre plus important de valeurs de couplages et/ou d'impulsions pour obtenir une précision accrue.

Cette table de correspondance est un exemple d'une table mémorisée en mémoire morte 204. Comme nous l'avons précédemment mentionné précédemment, plusieurs tables sont mémorisées en mémoire morte 204. Ces différentes tables correspondent à différents environnements de locaux tels que les locaux comportant des parois fortement réfléchissantes, différents placements de dispositifs de communication 10 les uns par rapport aux autres dans le local 100, ou des tables adaptées à une surface et/ou un volume de local 100.

Il est à remarquer que dans une variante de réalisation, une table comporte des coefficients de pondération $\alpha xy$ tous égaux à une valeur prédéterminée égale par exemple à la valeur 1. Cette table est par exemple utilisée lors de l'installation du système préalablement à la détermination des couplages effectuée soit par l'utilisateur, soit par la mesure automatique des couplages selon l'invention.

La Fig. 7 représente l'algorithme de transfert des signaux pondérés restitués par les haut-parleurs 40 des dispositifs de communication 10.

Au lancement de l'application, le processeur 200 lit à partir de la mémoire morte 204 ou du disque dur 211, les instructions du programme correspondant aux étapes E70 à E73 de la Fig. 7a et les charge en mémoire vive RAM 203 pour les exécuter.

A l'étape E70, le processeur 200 obtient les signaux X2n(x) destinés à être reproduits par chacun des haut-parleurs 40 du dispositif de communication 10.

Le processeur obtient ces signaux soit en interrogeant l'interface audio 207, soit en les lisant dans la mémoire vive RAM 203 si ceux-ci ont préalablement été mémorisés.

Cette étape effectuée, à l'étape E71, le processeur 200 obtient les coefficients de pondération $\alpha xy$ correspondant aux signaux X2n(x).

Le processeur 200, à partir des couplages, plus précisément des distances, préalablement saisies par l'utilisateur ou des couplages déterminés conformément à l'algorithme de la Fig. 5, détermine avec la table de correspondance représentée à la Fig. 6, pour chacun des couplages séparant chacun de ses haut-parleurs 40 de chacun des microphones 50 des autres dispositifs de communication 10, le coefficient à appliquer sur le ou les signaux délivrés à chaque autre dispositif de communication 10.

Par exemple, le processeur 200 du dispositif de communication 10a obtient les valeurs des coefficients $\alpha xy$ suivants : $\alpha ac$ ayant pour valeur 0,25, $\alpha ab$ ayant pour valeur 0,37, $\alpha bc$ ayant pour valeur 0,25 et $\alpha bb$ ayant pour valeur 0,25.

Cette opération effectuée, le processeur 200, à la même étape E71, multiplie chacun des signaux obtenus à l'étape E70 par le coefficient de pondération correspondant au signal.

Par exemple, le processeur 200 du dispositif de communication l0a multiplie le signal numérique équivalent au signal X2n(a) par le coefficient $\alpha ac$ et le signal numérique équivalent au signal X2n(b) par le coefficient $\alpha bc$.

Le processeur 200 du dispositif de communication 10a multiplie le signal numérique équivalent au signal X2n(a) par le coefficient $\alpha ab$ et le signal numérique équivalent au signal X2n(b) par le coefficient $\alpha bb$.

Ensuite, à l'étape E72, le processeur 200 du dispositif de communication 10a additionne les signaux pondérés par les coefficients $\alpha ac$ et $\alpha bc$ pour former un signal Sac. Le processeur 200 du dispositif de communication 10a additionne aussi les signaux pondérés par les coefficients $\alpha ab$ et $\alpha bb$ pour former un signal Sab.

Le signal Sac est alors égal à :

$$Sac = \alpha ac\ X2n(a) + \alpha bc X2n(b))$$

Le signal Sab est alors égal à :

$$Sab = \alpha ab\ X2n(a) + \alpha bb\ X2n(b))$$

Enfin, le processeur 200 du dispositif de communication 10a passe à l'étape E73 qui consiste à transférer les signaux Sac et Sab à l'interface 210 du dispositif de communication 10a de la Fig. 1. Le signal Sac est alors transféré sur la liaison 30c, tandis le signal Sab est alors transféré sur la liaison 30a.

L'algorithme tel que décrit est exécuté tant que des signaux sont retranscrits par les haut-parleurs 40 du dispositif de communication 10.

Le processeur 200 d'un terminal de communication reçoit par l'intermédiaire de l'interface 210 des signaux pondérés diffusés par les autres dispositifs de communication situés dans le même local conformément à l'algorithme décrit précédemment en référence à la Fig. 7. Par exemple, dans le cas du dispositif de communication 10a, celui-ci reçoit les signaux des liaisons 30a et 30c, transmis par les dispositifs de communication 10b et 10c. Le signal Sba provenant du dispositif de communication 10b est par exemple égal à: Sba = $\alpha ca$ X2n(c) + $\alpha da$X2n(d)) où X2n(c) et X2n(d) sont les signaux reproduits respectivement par les haut-parleurs 40c et 40d du dispositif de communication 10b.

Le signal Sca provenant du dispositif de communication 10c est par exemple égal à: Sca = $\alpha ea$ X2n(e) +

αfaX2n(f)) où X2n(e) et X2n(f) sont les signaux reproduits respectivement par les haut-parleurs 40e et 40f du dispositif de communication 10c

A la réception de ces signaux le processeur 200 transfère ces signaux à destination au module de contrôle d'écho 301 de l'interface audio 207 par l'intermédiaire de l'interface 300. Ces signaux sont alors traités conformément à ce qui a précédemment été décrit en référence à la Fig. 4

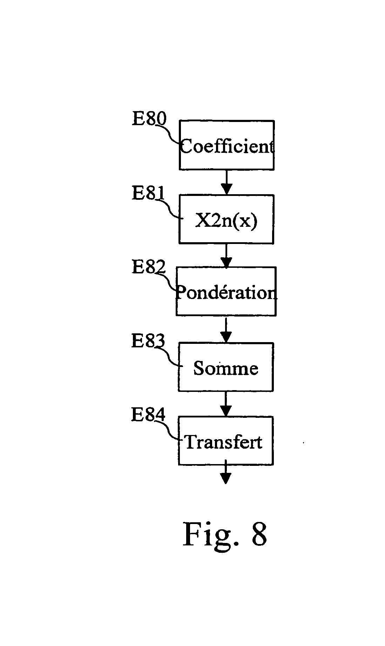

La Fig. 8 représente l'algorithme de traitement des signaux fournis par le microphone 50 du dispositif de communication selon une variante.

Au lancement de l'application, le processeur 200 du dispositif de communication 10 lit à partir de la mémoire morte 204 ou du disque dur 211, les instructions du programme correspondant aux étapes E80 à E84 de la Fig. 8 et les charge en mémoire vive RAM 203 pour les exécuter.

Dans cette variante, les signaux des haut-parleurs 40 des autres dispositifs de communication reçus par l'intermédiaire des liaisons 30 ne sont pas pondérés.

Par exemple, le processeur 200 du dispositif de communication 10a obtient à l'étape E80 les coefficients de pondération αxy préalablement déterminés pour chacun des haut-parleurs 40 des autres dispositifs de communication.

L'obtention peut se faire de différentes façons : en lisant dans la mémoire vive RAM 203 ces αxy coefficients préalablement transférés par les autres dispositifs de communication ou préalablement déterminés par le dispositif de communication 10a ou en interrogeant par exemple un serveur par l'intermédiaire de la carte réseau 208 qui dispose de ces coefficients.

A l'étape suivante, le processeur 200 du dispositif de communication 10a reçoit les signaux reproduits par les haut-parleurs 40c et 40d du dispositif de communication 10b par l'intermédiaire de l'interface 210 de la liaison 30a ainsi que les signaux reproduits par les haut-parleurs 40e et 40f du dispositif de communication 10c par l'intermédiaire de l'interface 210 de la liaison 30c.

Cette opération effectuée, le processeur 200 du dispositif de communication 10a, à l'étape E82, pondère chacun des signaux des haut-parleurs 40c, 40d, 40e et 40f par leurs coefficients αxy respectifs.

Le processeur 200, à l'étape E83, additionne ensuite ces signaux pondérés pour former un signal de correction d'écho croisé Sxa.

A l'étape E84, le processeur 200 du dispositif de communication 10a transfère le signal formé à l'étape précédente E83 à l'interface audio 207 et plus précisément au module de contrôle d'écho 301.

Ainsi, les échos provenant des autres dispositifs de communication sont supprimés.

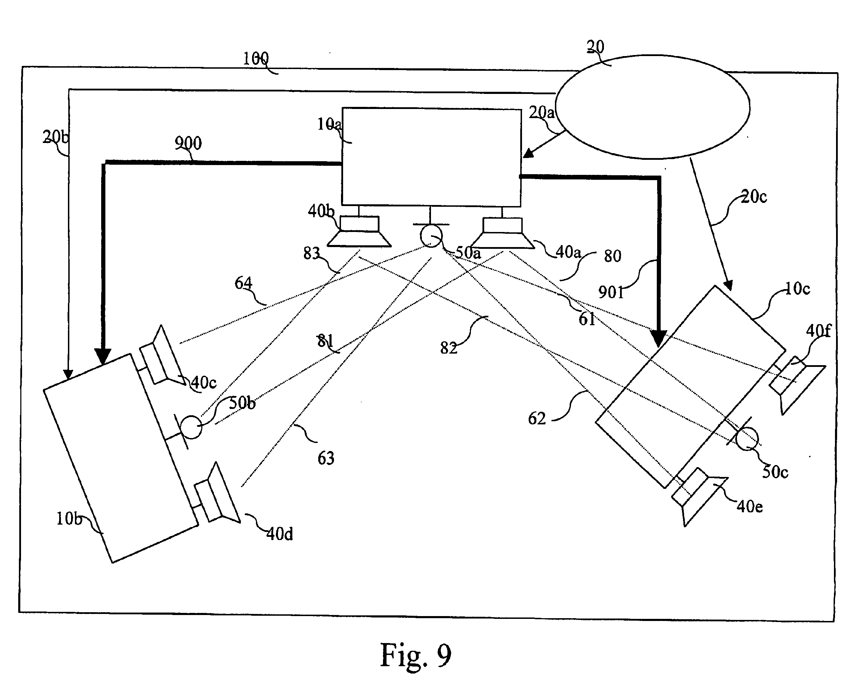

La Fig. 9 représente une seconde variante d'un système de communication conforme à l'invention.

Dans le système de communication conforme à la Fig. 1 précédemment décrit, chacun des dispositifs de communication 10 détermine les coefficients de pondération à appliquer sur les signaux reproduits par leurs haut-parleurs 40 respectifs, transfère les signaux respectifs ainsi que les coefficients de pondération ou les signaux respectifs pondérés aux autres dispositifs de communication 10.

Le système de communication de la Fig. 9 est identique au système de communication de la Fig. 1, hormis le fait que les liaisons 30a, 30b et 30c sont remplacées par des liaisons 900 et 901.

Dans ce système de communication, le dispositif de communication 10a est un dispositif de communication maître, les dispositifs de communication 10b et 10c sont des dispositifs de communication esclaves.

Les liaisons 900 et 901 sont par exemple des liaisons de type Ethernet. Ces liaisons 30 peuvent aussi être des liaisons de type RS232 ou peuvent être remplacées par les liaisons 20b et 20c. Bien entendu, d'autres types de liaisons peuvent être envisagés.

Le dispositif de communication 10a est relié au dispositif de communication 10b par l'intermédiaire d'une liaison 900. Cette liaison permet le transfert du dispositif de communication 10a au dispositif de communication 10b des signaux reproduits par les haut-parleurs 40a, 40b, 40e et 40f préalablement pondérés par un coefficient représentatif de leur distance respective avec le microphone 50b.

Le dispositif de communication 10a est relié au dispositif de communication 10c par l'intermédiaire d'une liaison 901. Cette liaison permet le transfert du dispositif de communication 10a au dispositif de communication 10c des signaux reproduits par les haut-parleurs 40a, 40b, 40c et 40d préalablement pondérés par un coefficient représentatif de leur distance respective avec le microphone 50c.

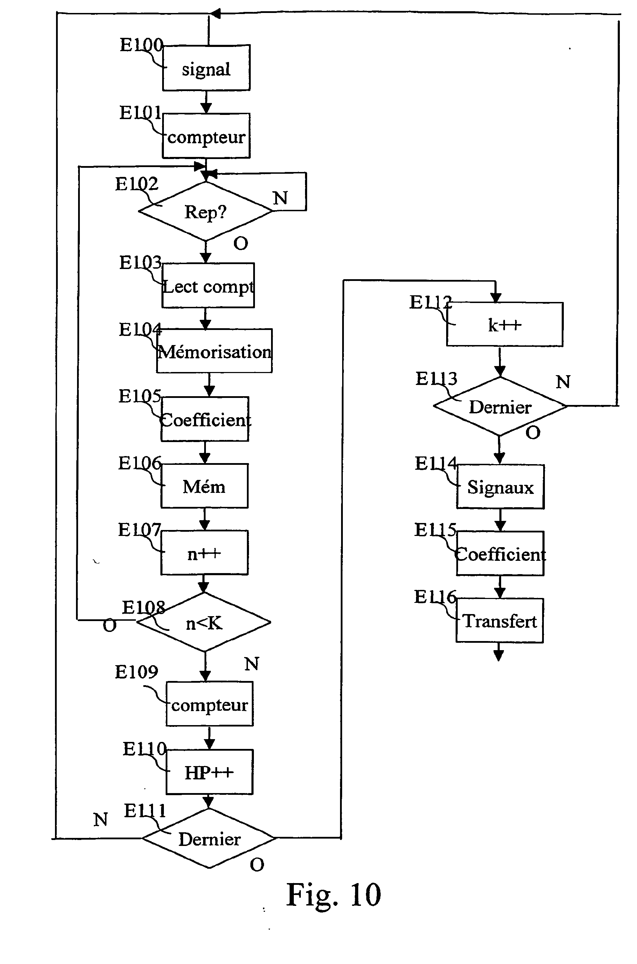

Cette liaison permet aussi le transfert du dispositif de communication 10a vers les dispositifs de communication 10b et 10c de signaux prédéterminés adaptés à la mesure automatique ou de requête de génération de signaux prédéterminés par les dispositifs de communication 10b et 10c pour la mesure automatique des couplages, comme cela sera décrit ultérieurement en référence à la Fig. 10.

Cette liaison permet aussi la réception d'informations représentatives de la réception par les dispositifs de communication 10b et 10c de signaux prédéterminés adaptés à la mesure automatique des couplages.

Le dispositif de communication maître 10a a une architecture similaire aux dispositifs de communication 10 précédemment décrits en référence à la Fig. 2. Il ne sera donc pas décrit plus en détail.

Les dispositifs de communication esclaves 10b et 10c ont une architecture similaire aux dispositifs de communication 10 précédemment décrits en référence à la Fig. 2. Ils ne seront donc pas décrits plus en détail.

Seul le dispositif maître 10a effectue l'algorithme de détermination automatique des couplages pour tous les haut-parleurs 40 et tous les microphones 50 des dispositifs de communication 10.

Le dispositif de communication maître 10a obtient les signaux reproduits par les haut-parleurs 40c, 40d, 40e et 40f des dispositifs de communication 10b et 10c par l'intermédiaire des liaisons 900 et 901 et transfère les signaux pondérés des haut-parleurs 40 des dispositifs de communication 10 aux autres dispositifs de communication 10.

Les dispositifs de communication esclaves 10b et 10c traitent les signaux fournis par leur microphone respectif 50b et 50c conformément à ce qui a été décrit dans la première variante de réalisation.

Il est à remarquer que le dispositif de communication 10a peut être intégré dans un autocommutateur si le réseau 20 est un réseau téléphonique commuté, ou un serveur si le réseau 20 est un réseau de type Ethernet.

Il est aussi à remarquer qu'en variante, le dispositif de communication 10a comprend les interfaces audio 207 des dispositifs de communication 10b et 10c et gère les tâches effectuées par ces dispositifs de communication. Seuls les microphones 50b, 50c et les haut-parleurs 40c, 40d, 40e et 40f sont placés à différents endroits dans le local 100. L'intégration de ces dispositifs de communication 10b, 10c en un unique dispositif de communication 10a permet ainsi de réduire le coût du système et aussi de s'affranchir des retards liés au réseau.

La Fig. 10 représente l'algorithme de détermination automatique des couplages et de transfert des signaux pondérés des haut-parleurs 40 des dispositifs de communication 10 mis en oeuvre dans la seconde variante de système de communication.

Au lancement de l'application, le processeur 200 du dispositif de communication maître 10a lit à partir de la mémoire morte 204 ou du disque dur 211, les instructions du programme correspondant aux étapes E100 à E116 de la Fig. 10 et les charge en mémoire vive RAM 203 pour les exécuter.

Le processeur 200 du dispositif de communication maître 10a connaît le nombre de dispositifs de communication esclaves 10b et 10c présents dans le local 100. Il connaît aussi le nombre de haut-parleurs 40 de chacun des dispositifs de communication 10 ainsi que leur nombre de haut-parleurs 40 respectifs.

Le processeur 200 du dispositif de communication maître 10a, préalablement à l'exécution de l'organigramme, initialise toutes les variables nécessaires au déroulement du programme ainsi que le compteur 202. Le processeur 200 du dispositif de communication maître 10a génère aussi un message sur le réseau 20 ou par l'intermédiaire des liaisons 900 et 901 à destination des autres dispositifs de communication 10b et 10c les informant qu'il va exécuter une procédure d'évaluation de distance.

Le dispositif de communication 10a détermine les coefficients de pondération à appliquer sur les signaux restitués par ses haut-parleurs 40a et 40b de la même façon que la détermination décrite en référence à la Fig. 5. Cette détermination ne sera donc pas décrite plus en détail.

Ces opérations effectuées, le processeur 200 du dispositif de communication maître 10a passe à l'étape E100 et lit à partir de la mémoire morte 204 ou du disque dur 211, les données représentatives d'un signal électrique prédéterminé. Ce signal est par exemple un signal audible mono fréquence. A la même étape, le processeur 200 du dispositif de communication maître 10a transfère les données représentatives du signal prédéterminé à un premier dispositif de communication esclave, par exemple au dispositif de communication 10b. Le dispositif de communication 10b transfère ce signal à sa carte son 207 qui transfère alors par exemple ce signal au haut-parleur 40c.

Ces opérations réalisées, le processeur 200 du dispositif de communication maître 10a déclenche, à l'étape E101, le compteur 202 représenté en pointillés à la Fig. 2 qui compte le nombre d'impulsions de l'horloge 201 représentée en pointillés à la Fig. 2.

L'étape suivante E102 est une boucle d'attente d'une réponse d'un des autres dispositifs de communication au signal sonore généré par le haut-parleur 40c à l'étape E100.

Les autres dispositifs de communication 10, en l'occurrence, le dispositif de communication 10c, étant préalablement informé de la procédure d'évaluation de distance génère, à la réception du signal généré par le haut-parleur 40c, un message de réponse comprenant entre autres son identifiant ou l'identifiant de son microphone 50c, sur le réseau 20 ou en variante sur la liaison 901 les reliant au dispositif de communication 10a.

Tant qu'une réponse n'est pas reçue, le processeur 200 du dispositif de communication maître 10a reste dans la boucle d'attente E102.

A la réception de la première réponse, le processeur 200 du dispositif de communication maître 10a passe à l'étape E103, qui consiste à lire la valeur courante du compteur 202.

La lecture effectuée, le processeur 200 du dispositif de communication maître 10a mémorise à l'étape E104, dans la mémoire vive 203, l'identifiant du dispositif de communication 10c ayant répondu ainsi que la valeur courante du compteur précédemment lue à l'étape E103.

Le processeur 200 du dispositif de communication maître à l'étape suivante E106 détermine le coefficient de pondération à appliquer sur le signal du haut-parleur 40 ayant généré le signal sonore, en l'occurrence, le haut-parleur 40c, et le microphone 50c du dispositif de communication 40c ayant répondu. Le processeur 200 consulte alors la table de correspondance représentée à la Fig. 6 permettant de déterminer les coefficients de pondération en fonction du nombre d'impulsions mémorisé à l'étape E104.

La détermination du coefficient αxy est basée sur un calcul effectué à partir de la vitesse de propagation du son dans l'air.

Cette opération effectuée, le processeur 200 du dispositif de communication maître 10a passe à l'étape E107 et mémorise le coefficient αxy déterminé, en l'occurrence, le coefficient αcc et sa valeur.

Le processeur 200 du dispositif de communication maître, à l'étape suivante E107, incrémente la variable n d'une unité et compare celle-ci au nombre d'autres dispositifs de communication K.

Le processeur 200 du dispositif de communication maître compare, à l'étape E108, la variable n à K. Si n est inférieure à K, tous les autres dispositifs de communication n'ont pas répondu au signal sonore généré à l'étape E100, le processeur 200 retourne alors à l'étape E102 et attend un nouveau message de réponse d'un autre dispositif de communication 10.

Il est à remarquer que dans notre exemple, seul le dispositif de communication 10c répond, le processeur passe donc à l'étape suivante E109.

L'étape E109 consiste pour le processeur 200 du dispositif de communication maître 10a à réinitialiser le compteur 202.

L'étape suivante consiste pour le processeur 200 du dispositif de communication maître 10a à incrémenter la variable HP d'une unité.

Cette opération effectuée, le processeur 200 du dispositif de communication maître 10a vérifie à l'étape E111 si la variable HP est inférieure au nombre de haut-parleurs 40 dont dispose le dispositif de communication esclave 10b. Dans notre exemple, le dispositif de communication esclave 10b comporte deux haut-parleurs 40c et 40d, le processeur retourne à l'étape E100 et un nouveau signal est généré par un haut-parleur 40 du dispositif de communication esclave 10b. Ce haut-parleur 40 est en l'occurrence le haut-parleur 40d.

Les étapes E101 à E111 s'exécutent alors de la même façon que celles précédemment décrites.

A l'étape E111, la variable HP est égale au nombre de haut-parleurs 40 dont dispose le dispositif de communication esclave 10b, le processeur 200 du dispositif de communication maître 10a passe alors à l'étape suivante E112.

L'étape E112 consiste pour le processeur 200 du dispositif de communication maître 10a à incrémenter la variable k d'une unité.

Cette opération effectuée, le processeur 200 du dispositif de communication maître 10a vérifie à l'étape E113 si la variable k est inférieure au nombre de dispositifs de communication esclaves 10b, 10c présents dans le local 100.

Dans notre exemple, le local 100 comportant deux dispositifs de communication esclaves, le processeur 200 du dispositif de communication maître 10a retourne à l'étape E100 et un nouveau signal est généré par un haut-parleur 40 du dispositif de communication esclave 10c. Ce haut-parleur 40 est en l'occurrence le haut-parleur 40e.

Les étapes E101 à E113 s'exécutent alors de la même façon que celles précédemment décrites.

A l'étape E111, la variable k est égale au nombre de dispositifs de communication esclaves 10b, 10c présents dans le local 100, le processeur 200 du dispositif de communication maître 10a passe à l'étape suivante E114.

L'étape E114 consiste à obtenir les signaux reproduits par les différents haut-parleurs 40. Le processeur 200 du dispositif de communication maître 10a pour cela obtient ces signaux par les liaisons 900 et 901. Si par exemple, le dispositif de communication maître est intégré dans un autocommutateur ou un serveur, le processeur 200 obtient ces signaux du réseau 20.

Cette opération effectuée, le processeur 200 du dispositif de communication maître 10a applique les coefficients mémorisés à l'étape E107 sur les signaux respectifs et transfère ces signaux pondérés aux dispositifs de communication esclaves 10b et 10c.

En variante, préalablement à l'étape E100, le processeur 200 détermine le délai de réponse par la liaison 900 et 901 des dispositifs de communication 10b et 10c. En effet si les liaisons 900 sont des liaisons lentes où la vitesse de transmission fluctue dans le temps comme une liaison par l'intermédiaire d'un réseau de type Internet, la détermination automatique du couplage risque d'être perturbée. Le processeur 200 génère sur les liaisons 900 et 901 par exemple des signaux classiquement connus sous la dénomination de PING à destination des autres dispositifs de communication, attend une réponse des dispositifs de communication 10a et 10b et détermine ainsi le délai de transfert sur le réseau en activant par exemple l'horloge 201 et le compteur 202.

Pour chacun des dispositifs de communication, le délai mesuré sera retranché de la valeur du compteur lue à l'étape E103.

Selon une autre variante, l'algorithme est réitéré de manière à déterminer les échos du signal sonore.

Les autres dispositifs de communication 10b, 10c génèrent, à la réception d'un autre signal qui est une réflexion par un des éléments du local 100 du signal généré par un haut-parleur 40, un message de réponse comprenant entre autres leur identifiant ou l'identifiant de leur microphone 50, sur le réseau 20 ou en variante sur les liaisons 900 et 901 les reliant au dispositif de communication 10a. Le processeur 200 du dispositif de communication 10a reçoit alors à l'étape E102 une réponse d'un des autres dispositifs de communication 10b, 10c au signal sonore généré par un haut-parleur 40 à l'étape E100.

Le processeur 200 mémorise les différentes réponses, détermine lequel parmi le signal direct et les signaux réfléchis est le plus significatif pour chaque autre dispositif de communication et applique le coefficient correspondant au signal le plus significatif en tant que coefficient représentatif du couplage.

Selon une autre variante, le processeur 200 du dispositif de communication maître 10a, l'étape E100, et lit en mémoire un message vocal prédéterminé d'une durée de l'ordre de quelques secondes et transfère celui-ci à un autre dispositif de communication, en l'occurrence le dispositif de communication 10b. Le dispositif de communication 10 génère alors ce signal par l'intermédiaire de son haut-parleur 40c.

Les autres dispositifs de communication 10, en l'occurrence, le dispositif de communication 10c, étant préalablement informé de la procédure d'évaluation de distance mémorise dans la mémoire vive 203 le signal capté par son microphone 50c. A la fin de la réception de ce signal, le dispositif de communication 10c transfère, par l'intermédiaire de la liaison 901, dans un signal de réponse, le signal qu'il a précédemment mémorisé au dispositif de communication 10a.

Le processeur 200 du dispositif de communication maître 10a à la réception de ce signal effectue un produit de convolution entre ce message reçu et le message vocal prédéterminé.

Bien entendu, ce processus est réitéré autant de fois que chaque dispositif de communication 10 comporte de haut-parleur. Ce processus est aussi réitéré autant de fois que chaque dispositif de communication comporte de microphones.

Grâce à ce produit de convolution, le dispositif de communication 10a est alors apte à déterminer tous les paramètres de couplages entre les dispositifs 10b et 10c selon notre exemple. Ainsi, la distance séparant chaque haut-parleur de chaque microphone peut être évaluée, les différentes réflexions des signaux générés par chaque haut-parleur peuvent aussi être déterminées et cela en fonction des différentes fréquences de l'annonce vocale.

Bien entendu le dispositif de communication 10a prend en compte dans cette détermination le délai de traitement de ces données et délai de propagation des signaux dans les liaisons 900 et 901.

Bien entendu, les variantes précédemment mentionnées peuvent aussi être combinées entre elles.

Bien entendu, la présente invention n'est nullement limitée aux modes de réalisation décrits ici, mais englobe, bien au contraire, toute variante à la portée de l'homme du métier définie par les revendications ci-jointes.

**Revendications**

1. Dispositif de traitement d'écho entre au moins deux dispositifs de communication locaux situés à proximité les uns des autres, connectés à un réseau de communication permettant une communication avec des dispositifs de communication distants, pour atténuer, dans un signal capté (Ye) par au moins un microphone (50) d'un desdits dispositifs de communication locaux les composantes d'un signal diffusé par au moins un haut-parleur (40) d'au moins un autre desdits dispositifs de communication locaux,
   **caractérisé en ce que** le dispositif de traitement d'écho comporte, pour le traitement du signal capté dans un desdits dispositifs de communication locaux :

   - des moyens de réception (210), par l'intermédiaire d'une liaison numérique (30) distincte dudit réseau de communication (20) avec au moins un autre desdits dispositifs de communication locaux, d'informations représentatives d'au moins un signal diffusé par le ou les haut-parleurs du ou desdits au moins un autre dispositif de communication,
   - des moyens pour modifier (200) le signal capté par le ou les microphones du dispositif de communication à partir des informations représentatives du signal diffusé, le signal diffusé étant pondéré par un coefficient représentatif d'une distance séparant au moins un haut-parleur dudit au moins un autre dispositif de communication, d'au moins un microphone du dispositif de communication.

2. Dispositif de traitement d'écho selon la revendication 1, **caractérisé en ce que** le dispositif de traitement d'écho est inclus dans un des dispositifs de communication.

3. Dispositif de traitement d'écho selon la revendication 2, **caractérisé en ce qu'**il comporte en outre des moyens de contrôle d'écho (301) entre au moins un des haut-parleurs (40) et au moins un microphone (50) du dispositif de communication.

4. Dispositif de traitement d'écho selon l'une quelconque des revendications 1 à 3, **caractérisé en ce que** les informations reçues et représentatives d'au moins un signal diffusé d'au moins un autre dispositif de communication ont préalablement été pondérées par un coefficient représentatif du couplage séparant un haut-parleur dudit au moins un autre dispositif de communication du microphone du dispositif de communication.

**5.** Dispositif de traitement d'écho selon la revendication 4, **caractérisé en ce que** les moyens pour modifier le signal capté (301) modifient le signal capté en fonction du signal diffusé pondéré d'au moins un autre dispositif de communication dans le signal de référence de contrôle d'écho du dispositif de communication.

**6.** Dispositif de traitement d'écho entre au moins deux dispositifs de communication locaux situés à proximité les uns des autres, connectés à un réseau de communication (20) permettant une communication avec des dispositifs de communication distants, pour atténuer les composantes d'un signal diffusé par au moins un haut-parleur (40) d'au moins un dispositif de communication local, dans un signal capté par au moins un microphone (50) d'au moins un autre dispositif de communication local,

**caractérisé en ce que** le dispositif de traitement d'écho comporte, en vu du traitement du signal capté dans au moins un autre desdits dispositifs de communication locaux :

- des moyens d'obtention d'informations représentatives du signal diffusé par le ou les haut-parleurs du dispositif de communication (200),
- des moyens de pondération des informations obtenues par un coefficient représentatif d'une distance séparant au moins un haut-parleur dudit au moins un autre dispositif de communication, d'au moins un microphone du dispositif de communication, et des moyens de transfert (210), par l'intermédiaire d'une liaison numérique (30) distincte dudit réseau de communication (20) avec au moins un autre dispositif de communication, des informations obtenues et pondérées.

**7.** Dispositif de traitement d'écho selon la revendication 6, **caractérisé en ce que** le dispositif de traitement d'écho comporte en outre des moyens d'obtention (205, 206, 201, 202) d'informations représentatives du couplage séparant au moins un hautparleur dudit au moins un dispositif de communication du microphone de l'autre dispositif de communication.

**8.** Dispositif de traitement d'écho selon la revendication 7, **caractérisé en ce que** le dispositif de traitement d'écho comporte en outre des moyens de pondération des informations représentatives du signal diffusé du dispositif de communication par des coefficients associés aux informations représentatives du couplage séparant au moins un haut-parleur dudit au moins un dispositif de communication du microphone de l'autre dispositif de communication.

**9.** Dispositif de traitement d'écho selon la revendication 8, **caractérisé en ce que** le dispositifs de communication comporte une pluralité de haut-parleurs (40) et **en ce que** les signaux reproduits par chaque haut-parleur dudit au moins un dispositif de communication sont pondérés par un coefficient respectif représentatif du couplage séparant chaque haut-parleur du dispositif de communication du microphone de l'autre dispositif de communication et **en ce que** les signaux pondérés sont sommés.

**10.** Dispositif de traitement d'écho selon l'une quelconque des revendications 6 à 9, **caractérisé en ce que** le dispositif de traitement d'écho comporte en outre des moyens de détermination du nombre d'autres dispositifs de communication (205, 206) et des moyens de détermination (205, 206) du nombre de haut-parleurs des autres dispositifs de communication.

**11.** Dispositif de traitement d'écho selon la revendication 9, **caractérisé en ce que** le dispositif de traitement d'écho comporte en outre:

- des moyens de génération d'au moins un signal audible prédéterminé (40),
- des moyens de réception (210), par l'intermédiaire d'une liaison avec au moins un autre dispositif, d'informations représentatives de la réception par au moins un autre dispositif du signal audible, - des moyens de détermination (200) du couplage séparant un haut-parleur dudit dispositifs de communication du microphone du au moins un autre dispositif de communication.

**12.** Procédé de traitement d'écho entre au moins deux dispositifs de communication locaux situés à proximité les uns des autres, connectés à un réseau de communication permettant une communication avec des dispositifs de communication distants, pour atténuer, dans un signal capté par au moins un microphone (50) d'un desdits dispositifs de communication locaux, les composantes d'un signal diffusé par au moins un haut-parleur (40) d'au moins un autre desdits dispositifs de communication locaux, **caractérisé en ce que** le procédé de traitement d'écho comporte les étapes:

- de réception, par l'intermédiaire d'une liaison numérique distincte (30) dudit réseau de communication (20) avec au moins un autre desdits dispositifs de communication locaux, d'informations représentatives d'au moins un signal diffusé par le ou les haut-parleurs du ou desdits au moins un autre dispositif de communication,
- de modification du signal capté par le ou les microphones du dispositif de communication en fonction des informations représentatives du signal diffusé, le signal diffusés étant pondéré par un coefficient représentatif d'une distance séparant au moins un haut-parleur dudit au moins un autre dispositif de communication d'au moins un microphone du dispositif de communication.

**13.** Procédé de traitement d'écho selon la revendication 12, **caractérisé en ce que** les informations reçues et représentatives d'au moins un signal diffusé d'au moins un autre dispositif de communication sont pondérées par un coefficient représentatif du couplage séparant un haut-parleur dudit au moins un autre dispositif de communication du microphone du dispositif de communication.

**14.** Procédé de traitement d'écho selon la revendication 13, **caractérisé en ce que** le signal capté pondéré est pris en compte dans le signal de référence de contrôle d'écho du dispositif de communication.

**15.** Procédé de traitement d'écho entre au moins deux dispositifs de communication locaux situés à proximité les uns des autres, connectés à un réseau de communication permettant une communication avec des dispositifs de communication distants, pour atténuer les composantes d'un signal diffusé par au moins un haut-parleur (40) d'au moins un dispositif de communication local, dans un signal capté par au moins un microphone (50) d'au moins un autre dispositif de communication local, **caractérisé en ce que** le procédé de traitement d'écho comporte les étapes :

- d'obtention (E70) d'informations représentatives du signal diffusé par le ou les haut-parleurs du dispositif de communication, - de pondération des informations obtenues par un coefficient représentatif d'une distance séparant au moins un haut-parleur dudit au moins un autre dispositif de communication, d'au moins une microphone du dispositif de communication,
- de transfert (E73) par l'intermédiaire d'une liaison numérique distincte (30) dudit réseau de communication (20) avec au moins l'autre dispositif de communication local des informations obtenues et pondérées.

**16.** Procédé de traitement d'écho selon la revendication 15, **caractérisé en ce que** le procédé comporte en outre une étape (E71) d'obtention d'informations représentatives du couplage séparant au moins un haut-parleur dudit au moins un dispositif de communication du microphone de l'autre dispositif de communication.

**17.** Procédé de traitement d'écho selon la revendication 16, **caractérisé en ce que** le procédé de traitement d'écho comporte en outre une étape (E71) de pondération des informations représentatives du signal diffusé du dispositif de communication par des coefficients associés aux informations représentatives du couplage séparant au moins un haut-parleur dudit au moins un dispositif de communication du microphone de l'autre dispositif de communication.

**18.** Procédé de traitement d'écho selon la revendication 16, **caractérisé en ce que** le dispositif de communication comporte une pluralité de haut-parleurs et **en ce que** les signaux reproduits par chaque haut-parleur dudit au moins un dispositif de communication sont pondérés par un coefficient respectif représentatif du couplage séparant chaque haut-parleur du dispositif de communication du microphone de l'autre dispositif de communication et les signaux pondérés sont sommés.

**19.** Procédé de traitement d'écho selon l'une quelconque des revendications 15 à à 18, **caractérisé en ce que** le procédé de traitement d'écho comporte en outre des étapes de détermination du nombre d'autres dispositifs de communication et de détermination du nombre de haut-parleurs des autres dispositifs de communication.

**20.** Procédé de traitement d'écho selon la revendication 19, **caractérisé en ce que** le procédé de traitement d'écho comporte en outre les étapes :

- de génération d'au moins un signal audible prédéterminé (E2),
- de réception, (E4) par l'intermédiaire d'une liaison avec au moins un autre dispositif, d'informations représentatives de la réception par le au moins un autre dispositif du signal audible,
- de détermination (E7) du couplage séparant un haut-parleur dudit dispositif de communication du microphone d'au moins un autre dispositif de communication.

**21.** Programme d'ordinateur stocké sur un support d'informations, ledit programme comportant des instructions permettant de mettre en oeuvre le procédé de traitement selon l'une quelconque des revendications 12 à 14, lorsqu'il est chargé et exécuté par un système informatique.

22. Programme d'ordinateur stocké sur un support d'informations, ledit programme comportant des instructions permettant de mettre en oeuvre le procédé de traitement selon l'une quelconque des revendications 15 à 20, lorsqu'il est chargé et exécuté par un système informatique.

**Claims**

1. Device for processing echo between at least two local communication devices situated close to one another, connected to a communication network allowing a communication with remote communication devices, in order to attenuate, in a signal (Ye) captured by at least one microphone (50) of one of said local communication devices, the components of a signal broadcast by at least one speaker (40) of at least one other of said local communication devices, **characterized in that** the echo-processing device comprises, for the processing of the signal captured in one of said local communication devices:

   - means (210) for receiving, via a digital link (30) distinct from said communication network (20) with at least one other of said local communication devices, information representative of at least one signal broadcast by the speaker(s) of the or of said at least one other communication device,
   - means (200) for modifying the signal captured by the microphone(s) of the communication device based on the information representative of the broadcast signal, the broadcast signal being weighted by a coefficient representative of a distance separating at least one speaker of said at least one other communication device from at least one microphone of the communication device.

2. Echo-processing device according to Claim 1, **characterized in that** the echo-processing device is included in one of the communication devices.

3. Echo-processing device according to Claim 2, **characterized in that** it also comprises means (301) for controlling echo between at least one of the speakers (40) and at least one microphone (50) of the communication device.

4. Echo-processing device according to any one of Claims 1 to 3, **characterized in that** the information received and representative of at least one broadcast signal of at least one other communication device has previously been weighted by a coefficient representative of the cross-coupling separating a speaker of said at least one other communication device from the microphone of the communication device.

5. Echo-processing device according to Claim 4, **characterized in that** the means for modifying the captured signal (301) modify the captured signal as a function of the weighted broadcast signal of at least one other communication device in the echo-control reference signal of the communication device.

6. Device for processing echo between at least two local communication devices situated close to one another, connected to a communication network (20) allowing a communication with remote communication devices, in order to attenuate the components of a signal broadcast by at least one speaker (40) of at least one local communication device, in a signal captured by at least one microphone (50) of at least one other local communication device, **characterized in that** the echo-processing device comprises, for the purpose of processing the captured signal in at least one other of said local communication devices:

   - means for obtaining information representative of the signal broadcast by the speaker(s) of the communication device (200),
   - means for weighting the information obtained by a coefficient representative of a distance separating at least one speaker of said at least one other communication device from at least one microphone of the communication device, and means (210) for transferring, via a digital link (30) distinct from said communication network (20) with at least one other communication device, the obtained and weighted information.

7. Echo-processing device according to Claim 6, **characterized in that** the echo-processing device also comprises means (205, 206, 201, 202) for obtaining information representative of the cross-coupling separating at least one speaker of said at least one communication device from the microphone of the other communication device.

8. Echo-processing device according to Claim 7, **characterized in that** the echo-processing device also comprises means for weighting the information representative of the broadcast signal of the communication device by coefficients associated with the information representative of the cross-coupling separating at least one speaker of said at least one communication device from the microphone of the other communication device.

9. Echo-processing device according to Claim 8, **characterized in that** the communication device comprises a plurality of speakers (40) and **in that** the signals reproduced by each speaker of said at least one communication device are weighted by a respective coefficient representative of the cross-coupling separating each speaker of the communication device from the microphone of the other communication device and **in that** the weighted signals are added.

10. Echo-processing device according to any one of Claims 6 to 9, **characterized in that** the echo-processing device also comprises means for determining the number of other communication devices (205, 206) and means (205, 206) for determining the number of speakers of the other communication devices.

11. Echo-processing device according to Claim 9, **characterized in that** the echo-processing device also comprises:

- means for generating at least one predetermined audible signal (40),
- means for receiving (210), via a link with at least one other device, information representative of the reception of the audible signal by at least one other device,
- means (200) for determining the cross-coupling separating a speaker of said communication device from the microphone of at least one other communication device.

12. Method for processing echo between at least two local communication devices situated close to one another, connected to a communication network allowing a communication with remote communication devices, in order to attenuate, in a signal captured by at least one microphone (50) of one of said local communication devices, the components of a signal broadcast by at least one speaker (40) of at least one other of said local communication devices,
**characterized in that** the echo-processing method comprises the steps:

- of receiving, via a digital link (30) distinct from said communication network (20) with at least one other of said local communication devices, information representative of at least one signal broadcast by the speaker (s) of the at least one other communication device,
- of modifying the signal captured by the microphone(s) of the communication device as a function of the information representative of the broadcast signal, the broadcast signal being weighted by a coefficient representative of a distance separating at least one speaker of said at least one other communication device from at least one microphone of the communication device.

13. Echo-processing method according to Claim 12, **characterized in that** the information received and representative of at least one broadcast signal of at least one other communication device is weighted by a coefficient representative of the cross-coupling separating a speaker of said at least one other communication device from the microphone of the communication device.

14. Echo-processing method according to Claim 13, **characterized in that** the weighted captured signal is taken into account in the echo-control reference signal of the communication device.

15. Method for processing echo between at least two local communication devices situated close to one another, connected to a communication network allowing a communication with remote communication devices, in order to attenuate the components of a signal broadcast by at least one speaker (40) of at least one local communication device, in a signal captured by at least one microphone (50) of at least one other local communication device,
**characterized in that** the echo-processing method comprises the steps:

- of obtaining (E70) information representative of the signal broadcast by the speaker(s) of the communication device,
- of weighting the obtained information by a coefficient representative of a distance separating at least one speaker of said at least one other communication device from at least one microphone of the communication device,
- of transferring (E73), via a distinct digital link (30) of said communication network (20) with at least the other local communication device, the obtained and weighted information.

**16.** Echo-processing method according to Claim 15, **characterized in that** the method also comprises a step (E71) of obtaining information representative of the cross-coupling separating at least one speaker of said at least one communication device from the microphone of the other communication device.

**17.** Echo-processing method according to Claim 16, **characterized in that** the echo-processing method also comprises a step (E71) of weighting the information representative of the broadcast signal of the communication device by coefficients associated with the information representative of the cross-coupling separating at least one speaker of said at least one communication device from the microphone of the other communication device.

**18.** Echo-processing method according to Claim 16, **characterized in that** the communication device comprises a plurality of speakers and **in that** the signals reproduced by each speaker of said at least one communication device are weighted by a respective coefficient representative of the cross-coupling separating each speaker of the communication device from the microphone of the other communication device and the weighted signals are added.

**19.** Echo-processing method according to any one of Claims 15 to 18, **characterized in that** the echo-processing method also comprises steps of determining the number of other communication devices and of determining the number of speakers of the other communication devices.

**20.** Echo-processing method according to Claim 19, **characterized in that** the echo-processing method also comprises the steps:

- of generation of at least one predetermined audible signal (E2),
- of reception (E4), via a link with at least one other device, of information representative of the reception of the audible signal by the at least one other device,
- of determination (E7) of the cross-coupling separating a speaker of said communication device from the microphone of at least one other communication device.

**21.** Computer program stored on an information medium, said program comprising instructions making it possible to apply the processing method according to any one of Claims 12 to 14, when it is loaded and executed by an information-processing system.

**22.** Computer program stored on an information medium, said program comprising instructions making it possible to apply the processing method according to any one of Claims 15 to 20, when it is loaded and executed by an information-processing system.

**Patentansprüche**

**1.** Vorrichtung zur Echoverarbeitung zwischen mindestens zwei nahe beieinander angeordneten, lokalen Kommunikationsvorrichtungen, die mit einem Kommunikationsnetzwerk verbunden sind, das eine Kommunikation mit fernen Kommunikationsvorrichtungen erlaubt, um in einem von mindestens einem Mikrofon (50) einer der lokalen Kommunikationsvorrichtungen aufgefangenen Signal (Ye) die Komponenten eines Signals zu dämpfen, das von mindestens einem Lautsprecher (40) mindestens einer anderen der lokalen Kommunikationsvorrichtungen ausgesendet wird,
**dadurch gekennzeichnet, dass** die Echoverarbeitungsvorrichtung für die Verarbeitung des in einer der lokalen Kommunikationsvorrichtungen aufgefangenen Signals aufweist:

- Einrichtungen (210) zum Empfang, über eine sich vom Kommunikationsnetzwerk (20) unterscheidende digitale Verbindung (30) mit mindestens einer anderen der lokalen Kommunikationsvorrichtungen, von für mindestens ein Signal repräsentativen Informationen, das von dem oder den Lautsprecher(n) der mindestens einen anderen Kommunikationsvorrichtung(en) ausgesendet wird,
- Einrichtungen, um das von dem oder den Mikrofonen der Kommunikationsvorrichtung aufgefangene Signal ausgehend von den für das ausgesendete Signal repräsentativen Informationen zu verändern (200), wobei das ausgesendete Signal mit einem Koeffizient gewichtet wird, der für einen Abstand repräsentativ ist, der mindestens einen Lautsprecher der mindestens einen anderen Kommunikationsvorrichtung von mindestens einem Mikrofon der Kommunikationsvorrichtung trennt.

**2.** Echoverarbeitungsvorrichtung nach Anspruch 1, **dadurch gekennzeichnet, dass** die Echoverarbeitungsvorrichtung in einer der Kommunikationsvorrichtungen enthalten ist.

3.  Echoverarbeitungsvorrichtung nach Anspruch 2, **dadurch gekennzeichnet, dass** sie außerdem Echoüberwachungseinrichtungen (301) zwischen mindestens einem der Lautsprecher (40) und mindestens einem Mikrofon (50) der Kommunikationsvorrichtung aufweist.

4.  Echoverarbeitungsvorrichtung nach einem der Ansprüche 1 bis 3, **dadurch gekennzeichnet, dass** die empfangenen und für mindestens ein ausgesendetes Signal mindestens einer anderen Kommunikationsvorrichtung repräsentativen Informationen vorher mit einem Koeffizient gewichtet wurden, der für die Kopplung repräsentativ ist, die einen Lautsprecher der mindestens einen anderen Kommunikationsvorrichtung vom Mikrofon der Kommunikationsvorrichtung trennt.

5.  Echoverarbeitungsvorrichtung nach Anspruch 4, **dadurch gekennzeichnet, dass** die Einrichtungen zum Verändern des aufgefangenen Signals (301) das aufgefangene Signal in Abhängigkeit von dem gewichteten gesendeten Signal mindestens einer anderen Kommunikationsvorrichtung in dem Echoüberwachungs-Bezugssignal der Kommunikationsvorrichtung verändern.

6.  Echoverarbeitungsvorrichtung zwischen mindestens zwei nahe beieinander angeordneten lokalen Kommunikationsvorrichtungen, die mit einem Kommunikationsnetzwerk (20) verbunden sind, das eine Kommunikation mit fernen Kommunikationsvorrichtungen erlaubt, um die Komponenten eines Signals, das von mindestens einem Lautsprecher (40) mindestens einer lokalen Kommunikationsvorrichtung ausgesendet wird, in einem Signal zu dämpfen, das von mindestens einem Mikrofon (50) mindestens einer anderen lokalen Kommunikationsvorrichtung aufgefangen wird, **dadurch gekennzeichnet, dass** die Echoverarbeitungsvorrichtung zur Verarbeitung des in mindestens einer anderen der lokalen Kommunikationsvorrichtungen aufgefangenen Signals aufweist:

    - Einrichtungen zum Erhalt von für das von dem oder den Lautsprecher(n) der Kommunikationsvorrichtung (200) ausgesendete Signal repräsentativen Informationen,
    - Einrichtungen zur Gewichtung der erhaltenen Informationen mit einem Koeffizient, der für einen Abstand repräsentativ ist, der mindestens einen Lautsprecher der mindestens einen anderen Kommunikationsvorrichtung von mindestens einem Mikrofon der Kommunikationsvorrichtung trennt, und Einrichtungen zur Übertragung (210) der erhaltenen und gewichteten Informationen über eine sich von dem Kommunikationsnetzwerk (20) unterscheidende digitale Verbindung (30) mit mindestens einer anderen Kommunikationsvorrichtung.

7.  Echoverarbeitungsvorrichtung nach Anspruch 6, **dadurch gekennzeichnet, dass** die Echoverarbeitungsvorrichtung außerdem Einrichtungen (205, 206, 201, 202) zum Erhalt von für die Kopplung repräsentativen Informationen aufweist, die mindestens einen Lautsprecher der mindestens einen Kommunikationsvorrichtung vom Mikrofon der anderen Kommunikationsvorrichtung trennt.

8.  Echoverarbeitungsvorrichtung nach Anspruch 7, **dadurch gekennzeichnet, dass** die Echoverarbeitungsvorrichtung außerdem Einrichtungen zur Gewichtung der für das von der Kommunikationsvorrichtung gesendete Signal repräsentativen Informationen mit Koeffizienten aufweist, die den Informationen zugeordnet sind, die für die Kopplung repräsentativ sind, die mindestens einen Lautsprecher der mindestens einen Kommunikationsvorrichtung vom Mikrofon der anderen Kommunikationsvorrichtung trennt.

9.  Echoverarbeitungsvorrichtung nach Anspruch 8, **dadurch gekennzeichnet, dass** die Kommunikationsvorrichtung mehrere Lautsprecher (40) aufweist, und dass die von jedem Lautsprecher reproduzierten Signale der mindestens einen Kommunikationsvorrichtung mit einem Koeffizient gewichtet werden, der für die Kopplung repräsentativ ist, die jeden Lautsprecher der Kommunikationsvorrichtung vom Mikrofon der anderen Kommunikationsvorrichtung trennt, und dass die gewichteten Signale summiert werden.

10. Echoverarbeitungsvorrichtung nach einem der Ansprüche 6 bis 9, **dadurch gekennzeichnet, dass** die Echoverarbeitungsvorrichtung außerdem Einrichtungen zur Bestimmung der Anzahl anderer Kommunikationsvorrichtungen (205, 206) und Einrichtungen zur Bestimmung (205, 206) der Anzahl von Lautsprechern der anderen Kommunikationsvorrichtungen aufweist.

11. Echoverarbeitungsvorrichtung nach Anspruch 9, **dadurch gekennzeichnet, dass** die Echoverarbeitungsvorrichtung außerdem aufweist:

- Einrichtungen zur Erzeugung mindestens eines vorbestimmten hörbaren Signals (40),
- Einrichtungen zum Empfang (210), über eine Verbindung mit mindestens einer anderen Vorrichtung, von Informationen, die für den Empfang des hörbaren Signals durch mindestens eine andere Vorrichtung repräsentativ sind,
- Einrichtungen zur Bestimmung (200) der Kopplung, die einen Lautsprecher der Kommunikationsvorrichtung vom Mikrofon der mindestens einen anderen Kommunikationsvorrichtung trennt.

**12.** Echoverarbeitungsverfahren zwischen mindestens zwei nahe beieinander angeordneten lokalen Kommunikationsvorrichtungen, die mit einem Kommunikationsnetzwerk verbunden sind, das eine Kommunikation mit fernen Kommunikationsvorrichtungen erlaubt, um in einem von mindestens einem Mikrofon (50) einer der lokalen Kommunikationsvorrichtungen aufgefangenen Signal die Komponenten eines Signals zu dämpfen, das von mindestens einem Lautsprecher (40) mindestens einer anderen der lokalen Kommunikationsvorrichtungen ausgesendet wird, **dadurch gekennzeichnet, dass** das Echoverarbeitungsverfahren die Schritte aufweist:

- des Empfangs, über eine sich vom Kommunikationsnetzwerk (20) unterscheidende digitale Verbindung (30) mit mindestens einer anderen der lokalen Kommunikationsvorrichtungen, von Informationen, die für mindestens ein Signal repräsentativ sind, das von dem oder den Lautsprecher(n) der mindestens einen anderen Kommunikationsvorrichtung ausgesendet wird,
- der Veränderung des von dem oder den Mikrofon(en) der Kommunikationsvorrichtung aufgefangenen Signals in Abhängigkeit von den für das ausgesendete Signal repräsentativen Informationen, wobei das ausgesendete Signal mit einem Koeffizient gewichtet wird, der für einen Abstand repräsentativ ist, der mindestens einen Lautsprecher der mindestens einen anderen Kommunikationsvorrichtung von mindestens einem Mikrofon der Kommunikationsvorrichtung trennt.

**13.** Echoverarbeitungsverfahren nach Anspruch 12, **dadurch gekennzeichnet, dass** die empfangenen und für mindestens ein ausgesendetes Signal mindestens einer anderen Kommunikationsvorrichtung repräsentativen Informationen mit einem Koeffizient gewichtet werden, der für die Kopplung repräsentativ ist, die einen Lautsprecher der mindestens einen anderen Kommunikationsvorrichtung vom Mikrofon der Kommunikationsvorrichtung trennt.

**14.** Echoverarbeitungsverfahren nach Anspruch 13, **dadurch gekennzeichnet, dass** das gewichtete aufgefangene Signal im Echoüberwachungs-Bezugssignal der Kommunikationsvorrichtung berücksichtigt wird.

**15.** Echoverarbeitungsverfahren zwischen mindestens zwei nahe beieinander angeordneten lokalen Kommunikationsvorrichtungen, die mit einem Kommunikationsnetzwerk verbunden sind, das eine Kommunikation mit fernen Kommunikationsvorrichtungen erlaubt, um die Komponenten eines Signals, das von mindestens einem Lautsprecher (40) mindestens einer lokalen Kommunikationsvorrichtung ausgesendet wird, in einem Signal zu dämpfen, das von mindestens einem Mikrofon (50) mindestens einer anderen lokalen Kommunikationsvorrichtung aufgefangen wird, **dadurch gekennzeichnet, dass** das Echoverarbeitungsverfahren die Schritte aufweist:

- des Erhalts (E70) von für das von dem oder den Lautsprecher(n) der Kommunikationsvorrichtung ausgesendete Signal repräsentativen Informationen,
- der Gewichtung der erhaltenen Informationen mit einem Koeffizient, der für einen Abstand repräsentativ ist, der mindestens einen Lautsprecher der mindestens einen anderen Kommunikationsvorrichtung von mindestens einem Mikrofon der Kommunikationsvorrichtung trennt,
- der Übertragung (E73) der erhaltenen und gewichteten Informationen über eine sich vom Kommunikationsnetzwerk (20) unterscheidende digitale Verbindung (30) mit mindestens der anderen lokalen Kommunikationsvorrichtung.

**16.** Echoverarbeitungsverfahren nach Anspruch 15, **dadurch gekennzeichnet, dass** das Verfahren außerdem einen Schritt (E71) des Erhalts von für die Kopplung repräsentativen Informationen aufweist, die mindestens einen Lautsprecher der mindestens einen Kommunikationsvorrichtung vom Mikrofon der anderen Kommunikationsvorrichtung trennt.

**17.** Echoverarbeitungsverfahren nach Anspruch 16, **dadurch gekennzeichnet, dass** das Echoverarbeitungsverfahren außerdem einen Schritt (E71) der Gewichtung der für das ausgesendete Signal der Kommunikationsvorrichtung repräsentativen Informationen mit Koeffizienten aufweist, die den Informationen zugeordnet sind, die für die Kopplung repräsentativ sind, die mindestens einen Lautsprecher der mindestens einen Kommunikationsvorrichtung vom Mikrofon der anderen Kommunikationsvorrichtung trennt.

18. Echoverarbeitungsverfahren nach Anspruch 16, **dadurch gekennzeichnet, dass** die Kommunikationsvorrichtung mehrere Lautsprecher aufweist, und dass die von jedem Lautsprecher der mindestens einen Kommunikationsvorrichtung reproduzierten Signale mit einem Koeffizient gewichtet werden, der für die Kopplung repräsentativ ist, die jeden Lautsprecher der Kommunikationsvorrichtung vom Mikrofon der anderen Kommunikationsvorrichtung trennt, und die gewichteten Signale summiert werden.

19. Echoverarbeitungsverfahren nach einem der Ansprüche 15 bis 18, **dadurch gekennzeichnet, dass** das Echoverarbeitungsverfahren außerdem Schritte der Bestimmung der Anzahl von anderen Kommunikationsvorrichtungen und der Bestimmung der Anzahl von Lautsprechern der anderen Kommunikationsvorrichtungen aufweist.

20. Echoverarbeitungsverfahren nach Anspruch 19, **dadurch gekennzeichnet, dass** das Echoverarbeitungsverfahren außerdem die Schritte aufweist:

   - der Erzeugung mindestens eines vorbestimmten hörbaren Signals (E2),
   - des Empfangs (E4), über eine Verbindung mit mindestens einer anderen Vorrichtung, von Informationen, die für den Empfang des hörbaren Signals durch die mindestens eine andere Vorrichtung repräsentativ sind,
   - der Bestimmung (E7) der Kopplung, die einen Lautsprecher der Kommunikationsvorrichtung vom Mikrofon mindestens einer anderen Kommunikationsvorrichtung trennt.

21. Computerprogramm, das auf einem Informationsträger gespeichert ist, wobei das Programm Anweisungen aufweist, die es ermöglichen, das Verarbeitungsverfahren nach einem der Ansprüche 12 bis 14 durchzuführen, wenn es von einem EDV-System geladen und ausgeführt wird.

22. Computerprogramm, das auf einem Informationsträger gespeichert ist, wobei das Programm Anweisungen aufweist, die es ermöglichen, das Verarbeitungsverfahren nach einem der Ansprüche 15 bis 20 durchzuführen, wenn es von einem EDV-System geladen und ausgeführt wird.

Fig. 1

Fig. 2

Fig. 3

Fig. 4

EP 1 634 435 B1

Fig. 5

| Distance (m) | Impulsion | Coefficient |
|:---:|:---:|:---:|
| 0.5 | 15 | 1 |
| 1 | 30 | 0.5 |
| 1.5 | 45 | .37 |
| 2 | 60 | 0.25 |
| 4 | 120 | 0.12 |
| 8 | 235 | 0.07 |
| >10 | 300 | 0 |

## Fig. 6

E70 — X2n(x)

E71 — Coeff, X

E72 — Somme

E73 — Transfert

## Fig. 7

Fig. 8

Fig. 9

**Fig. 10**

**EP 1 634 435 B1**

**RÉFÉRENCES CITÉES DANS LA DESCRIPTION**

**Documents brevets cités dans la description**

- EP 0903726 A
- FR 2824982